(19)

**Europäisches Patentamt**
**European Patent Office**
**Office européen des brevets**

(11) **EP 4 600 691 A1**

(12) **EUROPEAN PATENT APPLICATION**

(43) Date of publication:
**13.08.2025 Bulletin 2025/33**

(21) Application number: **24156585.2**

(22) Date of filing: **08.02.2024**

(51) International Patent Classification (IPC):
*G01S 7/48* (2006.01)    *G01S 17/89* (2020.01)
*G01S 17/931* (2020.01)    *G06T 7/11* (2017.01)
*G06T 7/187* (2017.01)    *G06V 10/762* (2022.01)
*G06V 20/56* (2022.01)

(52) Cooperative Patent Classification (CPC):
**G01S 17/931; G01S 7/4808; G01S 17/89;**
**G06F 18/23; G06T 7/11; G06T 7/187**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Einride Autonomous Technologies AB**
**111 56 Stockholm (SE)**

(72) Inventors:
• **DE VALON, Hugues**
  **111 56 Stockholm (SE)**

• **CHASSET, Camille**
  **111 56 Stockholm (SE)**
• **DAHLSTEN, Evelina**
  **111 56 Stockholm (SE)**
• **ANDERSSON, Simon**
  **111 56 Stockholm (SE)**
• **NICHOLLS, Tristan**
  **111 56 Stockholm (SE)**

(74) Representative: **Laine IP Oy**
**Porkkalankatu 24**
**00180 Helsinki (FI)**

(54) **GROUND FILTERING AND CLUSTERING OF LIDAR POINT DATA**

(57)    Systems and methods for a processor in connection with a light detection and ranging (LiDAR) sensor to cluster data points in a LiDAR data set using reduced processing power are described. The processor can receive a LiDAR dataset including a plurality of data points representing a plurality of points in a light detection and ranging (LiDAR) point cloud generated by a LiDAR device. For a group of data points having the same azimuth angle among the plurality of data points, the processor can, iteratively from a lowest elevation angle to a highest elevation angle, determining a search area of a specific data point, perform a range check on data points in the search area under a predefined sequence to identify neighbors of the specific data point, and cluster the specific data point with neighbors identified in the search area.

**EP 4 600 691 A1**

## Description

### BACKGROUND

The present disclosure relates in general to apparatuses and methods for filtering and clustering light detection and ranging (LiDAR) point data. Particularly, the LiDAR point data is filtered between ground and non-ground points, and the non-ground points are clustered into objects.

Ground filtering and clustering of LiDAR point data can occur in a system that uses LiDAR to map out surrounding areas. In an aspect, autonomous vehicles can include LiDAR sensors and use LiDAR points, collectively referred to as a LiDAR point cloud, to map areas surrounding the autonomous vehicle. The mapping based on LiDAR point cloud can be used by the autonomous vehicle to detect ground points and objects in the areas surrounding the autonomous vehicle such that the autonomous vehicle can distinguish the difference between open road to drive on and objects to avoid.

### SUMMARY

In one embodiment, a computer-implemented method for a processor in connection with a light detection and ranging (LiDAR) sensor to cluster data points in a LiDAR data set using reduced processing power is generally described. The computer-implemented method can include receiving a LiDAR dataset including a plurality of data points representing a plurality of points in a LiDAR point cloud generated by a LiDAR device. The computer-implemented method can further include, for a group of data points having the same azimuth angle among the plurality of data points, iteratively from a lowest elevation angle to a highest elevation angle, determining a search area of a specific data point. The computer-implemented method can further include performing a range check on data points in the search area under a predefined sequence to identify neighbors of the specific data point. The computer-implemented method can further include clustering the specific data point with neighbors identified in the search area.

In one embodiment, a system for clustering LiDAR data is generally described. The system can include a light detection and ranging (LiDAR) device and a processor in connection with the LiDAR device. The processor can be configured to receive a LiDAR dataset from the LiDAR device. The LiDAR dataset can include a plurality of data points representing a plurality of points in a LiDAR point cloud generated by the LiDAR device. The processor can be further configured to, for a group of data points having the same azimuth angle among the plurality of data points, iteratively from a lowest elevation angle to a highest elevation angle, determine a search area of a specific data point. The processor can be further configured to perform a range check on data points in the search area under a predefined sequence to identify neighbors of the specific data point. The processor can be further configured to cluster the specific data point with neighbors identified in the search area.

In one embodiment, a system for clustering LiDAR data is generally described. The system can include a light detection and ranging (LiDAR) device, a first processor and a second processor. The first processor can be in connection with the LiDAR device. The first processor can be configured to receive a LiDAR dataset from the LiDAR device. The LiDAR dataset can include a plurality of data points representing a plurality of points in a LiDAR point cloud generated by the LiDAR device. The first processor can map data points in the LiDAR dataset to a two-dimensional (2D) matrix. Each column in the 2D matrix can correspond to data points in the LiDAR dataset having same azimuth angle and each row in the 2D matrix can correspond to data points in the LiDAR dataset having same elevation angle. The second processor can be in connection with the LiDAR device and the first processor. The second processor can be configured to access the 2D matrix. The second processor can be configured to, for a column of data points in the 2D matrix, iteratively from a row in the 2D matrix corresponding to a lowest elevation angle to row in the 2D matrix corresponding to a highest elevation angle, determine a search area of a specific data point in the column of data points. The second processor can be further configured to perform a range check on data points in the search area under a predefined sequence to identify neighbors of the specific data point. The second processor can be further configured to cluster the specific data point with neighbors identified in the search area.

Advantageously, the systems and methods described herein can avoid the need to use relatively powerful or expensive processors for the same quantity of data when compared to conventional techniques such as RANSAC or k-means. Also, the techniques described herein can be performed by forward-looking systems without a need to select more powerful processors to be used in new vehicles and also by backwards-looking systems since processors in existing vehicles will have sufficient power to process the techniques described herein. Further, compared to conventional techniques, the usage of a 2D matrix, more data can be processed under the same processing time using the same computing devices. The systems and methods described herein can check individual columns in the 2D matrix in parallel, potentially freeing more time for later processing such as classification, object creation, motion planning, actuation, or other tasks that can use the results from the ground filtering described herein. Furthermore, the techniques described herein can be repeatable which leads to relatively simple verification and analysis for safety critical application(s).

Further features as well as the structure and operation of various embodiments are described in detail below with reference to the accompanying drawings. In the drawings, like reference numbers indicate identical or functionally similar elements.

BRIEF DESCRIPTION OF THE DRAWINGS

Fig. 1 is a diagram showing an example system that can implement ground filtering and clustering of light detection and ranging (LiDAR) point data in one embodiment.

Fig. 2 is a diagram showing an example system that can implement matrix mapping of LiDAR point data in one embodiment.

Fig. 3 is a diagram showing an example of mapping a LiDAR point cloud to a matrix in one embodiment.

Fig. 4 is a diagram showing an example of estimated ground determination in one embodiment.

Fig. 5 is a diagram showing another example of ground filtering of points in a LiDAR point cloud in one embodiment.

Fig. 6 is a diagram showing an example of a backwards check in ground filtering of points in a LiDAR point cloud in one embodiment.

Fig. 7 is a diagram showing an example system that can implement ground filtering of LiDAR point data in one embodiment.

Fig. 8 is a diagram showing another example system that can implement ground filtering of LiDAR point data in one embodiment.

Fig. 9 is a diagram showing an example search area for clustering LiDAR point data in one embodiment.

Fig. 10 is a diagram showing an example of a filtered search area for clustering LiDAR point data in one embodiment.

Fig. 11 is a diagram showing an example of clustering LiDAR point data using a plurality of zones in a filtered search area in one embodiment.

Fig. 12 is a diagram showing another example of clustering LiDAR point data using a plurality of zones in a filtered search area in one embodiment.

Fig. 13 is a diagram showing an example of a range check that can be performed in clustering LiDAR point data in one embodiment.

Fig. 14 is a diagram showing an example of identified neighbor data points in clustering LiDAR point data in one embodiment.

Fig. 15 is a diagram showing an example of sorting points in a cluster for polygon creation in one embodiment.

Fig. 16 is a diagram showing an example of contour creation for polygon creation in one embodiment.

Fig. 17 is a diagram showing an example of polygon simplification in one embodiment.

Fig. 18 is a diagram showing a front line and a simplified front line in one embodiment.

Fig. 19 is a diagram showing an example system that can implement clustering of LiDAR point data in one embodiment.

Fig. 20 is a diagram showing another example system that can implement clustering of LiDAR point data in one embodiment.

Fig. 21 is a diagram showing an example system that can implement ground filtering and clustering of LiDAR point data in one embodiment.

Fig. 22 is a diagram showing a process of clustering of LiDAR point data in one embodiment.

Fig. 23 is a diagram showing a process of filtering ground points in a LiDAR dataset in one embodiment.

DETAILED DESCRIPTION

In the following description, numerous specific details are set forth, such as particular structures, components, materials, dimensions, processing steps and techniques, in order to provide an understanding of the various embodiments of the present application. However, it will be appreciated by one of ordinary skill in the art that the various embodiments of the present application may be practiced without these specific details. In other instances, well-known structures or processing steps have not been described in detail in order to avoid obscuring the present application.

In an aspect, the beams of a LiDAR sensor can contact physical points such as the ground, various objects, other vehicles and/or road users. Thus, a LiDAR point cloud can provide information such as distance between the LiDAR sensor and detected objects. The number of points in a LiDAR point cloud can be relatively large, such as approximately 100,000 points in some applications. In an aspect, systems that use random sample consensus (RANSAC) techniques or k-means for filtering and clustering can be relatively slow due to the number of iterations required to perform the filtering and clustering for such large number of points. Also, RANSAC is based on randomness which could be difficult to use in safety critical situations, and k-means can also be initialized with randomness. For both RANSAC and k-means, the randomness can cause the algorithms to be not reproducible. Further, RANSAC systems may not provide accuracy sufficient to detect small objects on the ground. To be described in more detail below, the methods and systems described herein can provide a relatively fast technique to filter points in a LiDAR point cloud as ground points or non-ground points and cluster the non-ground points for object detection purposes. The complexity of the systems described herein can achieve O(N) with N being the number of points, and the techniques described herein can be reproducible

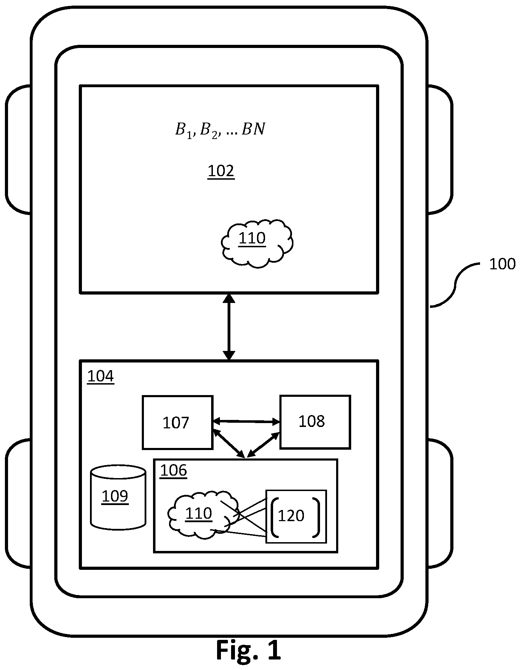

Fig. 1 is a diagram showing an example system that can implement ground filtering and clustering of light detection and ranging (LiDAR) point data in one embodiment. System 100 can be a computing system implemented in vehicles, including autonomous vehicles and non-autonomous vehicles. System 100 can include a LiDAR device 102 and one or more controller 104. LiDAR device 102 can be configured to emit a plurality of light beams, such as N light beams denoted as $B_1$, $B_2$, ..., $B_N$, in a plurality of different directions. Light beams emitted from LiDAR device 102 may not interfere with other sensors (i.e. camera, human eye) and can have wavelengths in the near infrared part of the electromagnetic spectrum, such as approximately 750 nanometers (nm) to 1.5 micrometers ($\mu$m). When a light beam comes into contact with a physical object, the light beam can be reflected towards LiDAR device 102. The reflections received at LiDAR device 102 can form a LiDAR point cloud that include N data points representing reflections of the N light beams. LiDAR device 102 can be configured to convert the LiDAR point cloud into a LiDAR dataset 110. LiDAR dataset 110 can be a collection of data (herein may be referred to as data points) representing physical parameters of the points in the LiDAR point cloud. These physical parameters can include, but not limited to, three dimensional (3D) coordinates in a space that represent surfaces of objects, range, azimuth angle, elevation angle, intensity, classification of features, global positioning system (GPS) time, or other parameters.

In an aspect, reflections of the light beams emitted by LiDAR device 102 can arrive at LiDAR device 102 at respective arrival times. LiDAR device 102 can include one or more processors configured to determine the round trip times (RTTs) of the light beams, such as by determining differences between an emission time of the light beams and the arrival times of the reflections at LiDAR device 102. LiDAR device 102 can use the RTTs to determine ranges or distances between LiDAR device 102 and the objects that reflected the light beams.

In one embodiment, controller 104 can include a processor 106, a processor 107, and a processor 108. In one embodiment, controller 104 can be a microcontroller built into a single integrated circuit (IC) including one or more processors (or a multicore processor with multiple cores), memory devices (e.g., volatile and/or non-volatile memory), such as a memory device 109, input/output (I/O) controls and interfaces, network components and interfaces, or other electronic components. In one embodiment, each one of processors 106, 107, 108 can be an individual processor configured or programmed to perform individual tasks. In one embodiment, each one of processors 106, 107, 108 can be a processor core of a multicore processor, and each processor core can be configured or programmed to perform an individual task. In one embodiment, when controller 104 includes multiple individual processors (e.g., processors 106, 107, 108), controller 104 can be a system on chip (SoC) IC and the individual processors can communicate with one another via digital interfaces and various types of communication bus, such as RS-485, I2C, CAN bus, or other types of communication bus.

Processor 106 can be a matrix mapping processor configured to map data points in LiDAR dataset 110 to a matrix 120, where matrix 120 can be a two-dimensional matrix. Processor 107 can be a ground filtering processor configured to determine whether points in the LiDAR point cloud represented by LiDAR dataset 110 are ground points or non-ground points. In one embodiment, LiDAR device 102 can send LiDAR dataset 110 to processor 107 and processor 107 can determine whether points in the LiDAR point cloud represented by LiDAR dataset 110 are ground points or non-ground points. In one embodiment, processor 106 can send matrix 120 to processor 107 and processor 107 can be configured to use matrix 120 to determine whether points in the LiDAR point cloud represented by LiDAR dataset 110 are ground points or non-ground points. Processor 108 can be a clustering controller configured to cluster data points in LiDAR dataset 110 into clusters 130 that can represent objects in physical space. In one embodiment, LiDAR device 102 can send LiDAR dataset 110 to processor 108 and processor 108 can be configured to cluster data points in LiDAR dataset 110. In one embodiment, processor 106 can send matrix 120 to processor 108 and processor 108 can be configured to use matrix 120 to cluster data points in LiDAR dataset 110. In one embodiment, processor 107 can filter out data points in LiDAR dataset 110 that are determined to be the ground points from matrix 120 and send the non-ground data points in matrix 120 to processor 108, and processor 108 can cluster the non-ground data points provided by processor 107.

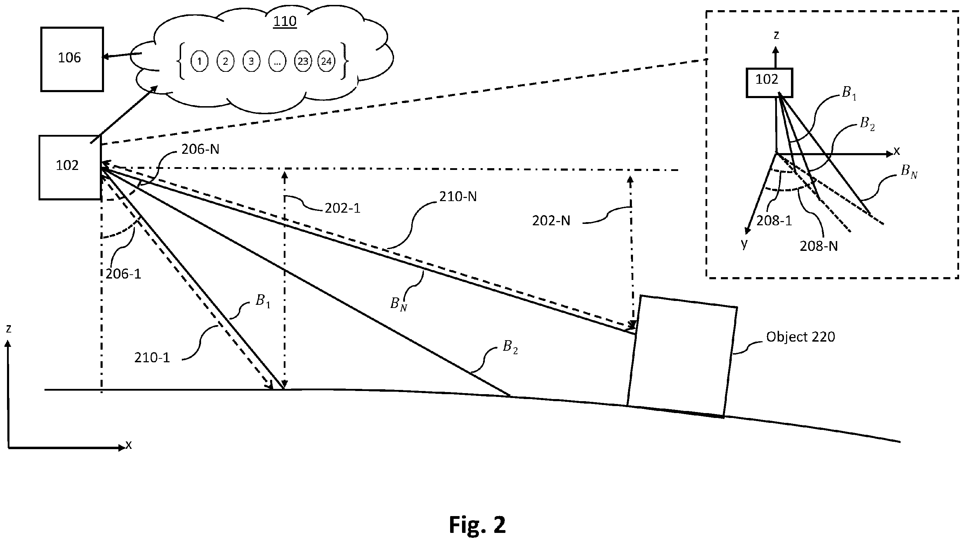

Fig. 2 is a diagram showing an example system that can implement matrix mapping of LiDAR point data in one embodiment. Descriptions of Fig. 2 may reference at least some of the components that are shown in Fig. 1. In an embodiment, LiDAR device 102 can emit light beams $B_1$, $B_2$, ..., $B_N$ at different elevations angles 206-1,...,206-N and at different azimuth angles 208-1,... ,208-N, with respect to LiDAR device 102. In one embodiment, LiDAR device 102 can record and store the emission times of

light beams $B_1$, $B_2$, ..., $B_N$ and arrival times of the reflections of light beams $B_1$, $B_2$, ..., $B_N$. LiDAR device 102 can determine the RTTs of the light beams $B_1$, $B_2$, ..., $B_N$ and use the determined RTTs to determine the ranges of light beams $B_1$, $B_2$, ..., $B_N$, where the ranges represent distances between LiDAR device 102 and the objects (e.g., an object 220 and the ground) that reflected light beams $B_1$, $B_2$, ..., $B_N$. In the example shown in Fig. 2, the ranges of light beams $B_1$, $B_2$, ..., $B_N$ are labeled as ranges 210-1,... ,210-N.

LiDAR device 102 can be further configured to determine an altitude of a reflection point of the N light beams. The determined altitude can be a vertical distance between the reflection point of a light beam and an altitude of LiDAR device 102 with respect to ground. By way of example, light beam B1 can be reflected by the ground and LiDAR device 102 can use range 210-1 and elevation angle 206-1 to determine altitudes 202-1,...,202-N for the N light beams. In an aspect, the altitude can be determined by multiplying the range and sine(90° - elevation angle).

LiDAR device 102 can index the N light beams. In the example shown in Fig. 2, LiDAR device 102 can index 24 light beams as numbers 1 to 24. LiDAR device 102 store the indices, the ranges, determined altitudes, elevation angles and azimuth angles of the N light beams as data with a specific data format, such as the LAS data format. LiDAR device 102 can arrange the stored data as data points in LiDAR dataset 110. By way of example, a specific data point in LiDAR dataset 110 can be stored in the specific data format that includes the index 1, the range 210-1, the determined altitude 202-1, the elevation angle 206-1 and the azimuth angle 208-1. LiDAR device 102 can send LiDAR dataset 110 to controller 104, or to one or more of processors 106, 107 and 108. In one embodiment, controller 104 can store LiDAR dataset 110 that includes the indices, the ranges, the determined altitudes, elevation angles and azimuth angles of the N light beams in memory device 109. Processors 106, 107, 108 can be configured to access the stored LiDAR dataset 110 from memory device 109.

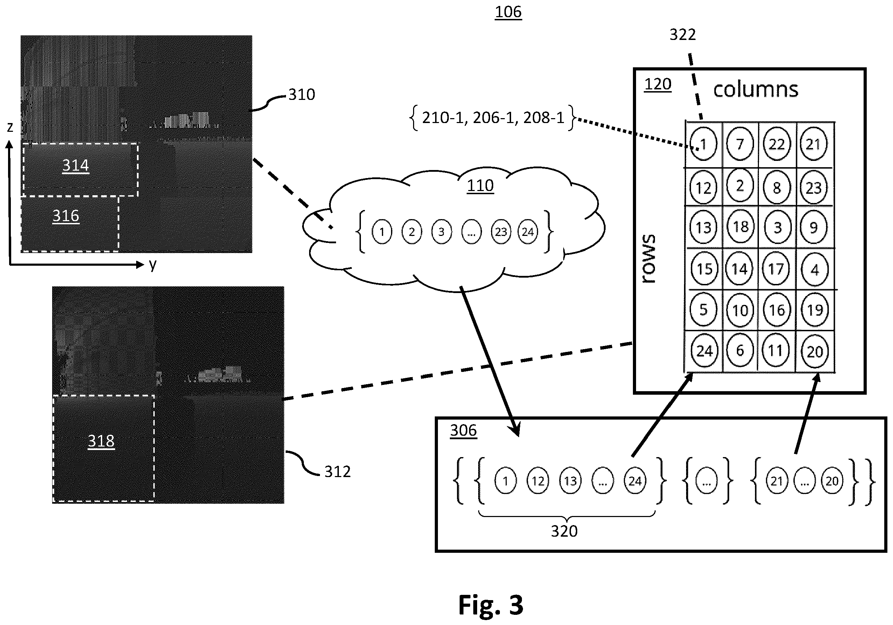

Fig. 3 is a diagram showing an example of mapping a LiDAR point cloud to a matrix in one embodiment. Descriptions of Fig. 3 may reference at least some of the components that are shown in Fig. 1 and Fig. 2. Processor 106 can receive LiDAR dataset 110 from LiDAR device 102 and map the data points in LiDAR dataset 110 to matrix 120. In one embodiment, mapping of the data points in LiDAR dataset 110 to matrix 120 can be dependent on an orientation of a LiDAR sensor in LiDAR device 102. In one embodiment, if a LiDAR sensor in LiDAR device 102 is mounted in an upright orientation, then after the mapping, the left-most column in matrix 120 corresponds to a left-most azimuth angle (e.g., closest to -y axis on the x-y plane shown in Fig. 2) and the bottom-most row in matrix 120 corresponds to the lowest elevation angle (e.g., closest to -z axis on the plane formed by x axis and -z axis shown in Fig. 2).

To map data points in LiDAR dataset 110 to matrix 120 when the LiDAR sensor in LiDAR device 102 is mounted in the upright orientation, processor 106 can use azimuth angles of the data points in LiDAR dataset 110 to generate an indexes matrices 206. In one embodiment, processor 106 can identify the azimuth angles of each data point in LiDAR dataset 110 and generate an indexes matrices 206. Indexes matrices 206 can include a plurality of row matrices arranged based on the identified azimuth angles. Each one of the row matrices in indexes matrices 306 can correspond to one azimuth angle. By way of example, a row matrix 320 including data points with indices 1, 12, 13, 15, 5, and 24 can have the same azimuth angle.

Processor 106 can map LiDAR dataset 110 to matrix 120 by arranging the row matrices in indexes matrices 306 as columns of matrix 120 (e.g., transposing the row matrices). By way of example, a transpose of a row matrix 320 can become a column 322 in matrix 120. Further, processor 106 can sort the data points in the columns of matrix 120 based on the elevation angles. By way of example, processor 106 can sort the data points in column 322 by descending elevation angles such that the index 24 corresponds to a point having the lowest elevation angle and the index 1 corresponds to a point having the highest elevation angle.

In another embodiment, if the LiDAR sensor in LiDAR device 102 is mounted upside down, then after the mapping, the right-most column in matrix 120 corresponds to a left-most azimuth angle and the top-most row in matrix 120 corresponds to the lowest elevation angle. In another embodiment, if the LiDAR sensor in LiDAR device 102 is mounted sideways (e.g., the top of the LiDAR sensor pointing toward the y-direction shown in Fig. 2), then after the mapping, the right-most column in matrix 120 corresponds to the lowest elevation angle and the bottom-most row in matrix 120 corresponds to the left-most azimuth angle.

Further, in one or more embodiments, processor 106 can identify the elevation angles of each data point in LiDAR dataset 110 and generate indexes matrices 306 that include row matrices corresponding to elevation angles. Processor 106 can map LiDAR dataset 110 to matrix 120 by arranging the row matrices in indexes matrices 306 as rows of matrix 120 and sorting the data points in the rows based on the azimuth angles. In another embodiment, processor 106 can identify the azimuth and elevation angles of each point in LiDAR dataset 110, sort the identified azimuth and elevation angles and generate indexes matrices 306 using the sorted azimuth and elevation angles. Processor 106 can map LiDAR dataset 110 to matrix 120 by directly arranging the row matrices in indexes matrices 306 into matrix 120 based on the sorted azimuth and elevation angles.

In one embodiment, data points in LiDAR dataset 110 can be arranged based on the light beam indices. Due to the arrangement based on the light beam indices, when LiDAR dataset 110 is rendered into a two-dimensional image, the rendered two-dimensional image may include unaligned portions. By way of example, when LiDAR dataset 110 is rendered into an image 310, image 310 can include multiple unaligned portions such as portions 314 and 316.

The mapping of data points in LiDAR dataset 110 to matrix 120 can allow portions of LiDAR dataset 110 to be aligned. In the example shown in Fig. 3, after mapping data points in LiDAR dataset 110 to matrix 120, an image 312 rendered based on matrix 120 can include aligned portions, such as a portion 318 that aligns portion 314 with portion 316. In an aspect, the number of columns and rows in the matrix 120 can vary depending on the configuration of the LiDAR device 102 and the amount of data points in LiDAR dataset 110.

Further, in response to data points in LiDAR dataset 110 being mapped to matrix 120, processor 106 can store, in memory device 109, associations between 1) the matrix coordinates of the elements in matrix 120 with 2) the indices of the data points LiDAR dataset 110. By way of example, as shown in Fig. 3, processor 106 can store an association between a matrix coordinate (1, 1) of matrix 120 with the index number 1 to indicate that the element at row 1 and column 1 of matrix 120 represents the point of beam $B_1$. Other components in controller 104, such as processor 107, 108, can access these stored associations from memory device 109.

In one embodiment, processor 106 may create matrix 120 once, and any new data obtained by the N light beams or any update to LiDAR dataset 110 can be updated in matrix 120. By way of example, as a vehicle including system 100 travels on different terrain, the N light beams can be reflected by different objects and ground and the range value in matrix 120 can be updated. However, other attributes such as azimuth and elevation angles can remain the same. Therefore, using matrix 120 to perform the ground filtering and clustering described herein can provide an improved processor speed and power when compared to other systems that may process three dimensional LiDAR point cloud.

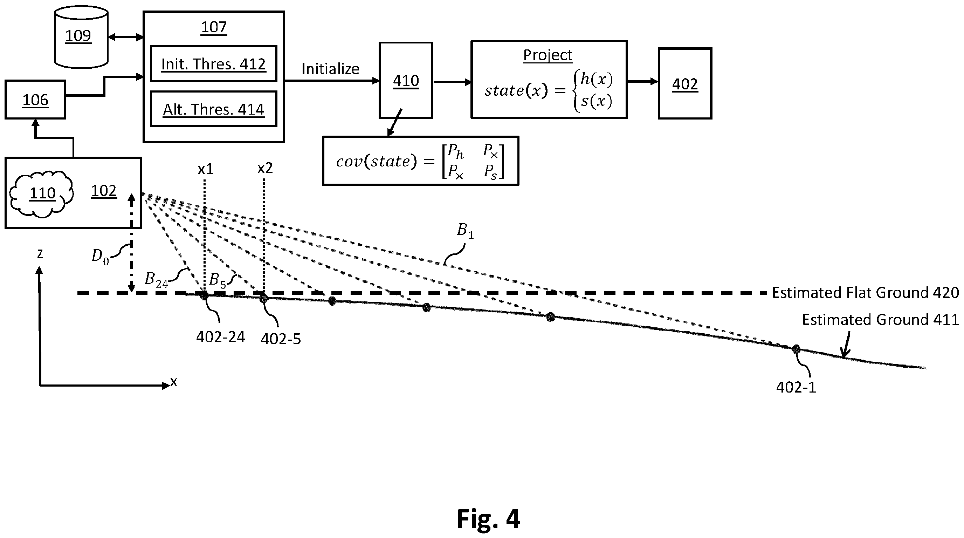

Fig. 4 is a diagram showing an example of estimated ground determination in one embodiment. Descriptions of Fig. 4 may reference components in Fig. 1 to Fig. 3. In one embodiment, processor 107 can be configured to determine an estimated ground 411. Estimated ground 411 can be an estimation of ground points in front of (e.g., +x direction) LiDAR device 102. Processor 107 can determine a plurality of estimated ground points 402 and the estimated ground points 402 can form estimated ground 411. The estimated ground points 402 can correspond to the N light beams. In the example shown in Fig. 4, a plurality of ground points 402-24, 402-5,...,402-1 correspond to the light beams $B_{24}$, $B_5$,... ,$B_1$ of column 322 in matrix 120 shown in Fig. 3. To be described in more detail below, a determination of whether a data point in LiDAR dataset 110 corresponds to a ground point or non-ground point includes comparing a determined altitude of the data point with a corresponding estimated ground point 402 along estimated ground 411. In one embodiment, processor 107 can use a Kalman filter 410 to determine the estimated ground points 402. Determination of the estimated ground points can include initializing Kalman filter 410 and determining the estimated ground points 402 using a result of the initialization.

Initialization of Kalman filter 410 can begin with processor 107 identifying data points that represent points in the LiDAR point cloud that are closest (e.g., shortest distance along x axis) to LiDAR device 102. Processor 107 can use the identified closest data points to project a plurality of states, denoted as *state(x)*, of the Kalman filter 410 and the projected states *state(x)* can be converted into the estimated ground points 402 that form estimated ground 411. The states *state(x)* can vary according to a horizontal range x of the N light beams. A horizontal range of a k-th light beam can be the horizontal component, or x-component, of the range (e.g., 210-k) of the k-th light beam or $B_k$. In the example shown in Fig. 4, a horizontal range of light beam $B_{24}$ can be x1 and a horizontal range of light beam $B_5$ can be $x_2$. The differences between horizontal ranges of consecutive light beams can be same or different, depending on a setting of LiDAR device 102. Further, a state *state(x)* can include a height $h(x)$ and a slope $s(x)$, where $h(x)$ denotes an estimated altitude and $s(x)$ denotes a slope of an estimated ground point 402.

To initialize Kalman filter 410, processor 107 can check the data points having the same azimuth angle iteratively from the lowest elevation to the highest elevation to identify a data point that is closest to LiDAR device 102. For a k-th data point being checked in the initialization of Kalman filter 410, processor 107 can compare a difference between a determined altitude 202-k and an estimated flat ground value 420 with a predefined initialization threshold 412. The estimated flat ground value 420 can be constant and can define an expected height $D_0$. The expected height $D_0$ can be a distance between a specific part of LiDAR device 102 (e.g., bottom surface, center, emitter of the N light beams, or other parts) and estimated flat ground 420. Estimated flat ground value 420 can be predefined and stored in memory device 109. If the difference between determined altitude 202-k and the estimated flat ground value 420 is greater than the predefined initialization threshold 412, then processor 107 can continue to the next data point (e.g., the (k+1)-th data point) and compare a difference between a determined altitude 202-(k+1) and the estimated flat ground value with the predefined initialization threshold.

In one embodiment, processor 107 can be configured to determine the predefined initialization threshold 412. The determination of predefined initialization threshold 412 can be based on a predefined altitude threshold 414, an expected worst case slope, horizontal range of a point and a maximum allowed threshold. In an aspect, since the horizontal range of a point can vary for different light beams, the predefined initialization threshold 412 can vary for different light beams as well. The predefined altitude threshold 414 can be a threshold to be used by processor 107 for determining whether a data point corresponds to ground point or non-ground point. The expected worst case slope can be a maximum tolerance value (e.g., number of degrees) for a slope between two consecutive estimated ground points 402. The maximum allowed threshold can be a predefined threshold stored in memory device 109 of controller 104. In one embodiment, processor 107 can be configured to determine an intermediate threshold equivalent to a sum of 1) predefined altitude threshold 414 and 2) a product of expected worst case slope and horizontal range of a data point. In other words, intermediate threshold = predefined altitude threshold 414 + (expected worst case slope x horizontal range). Processor 107 can select the smaller value between the intermediate threshold and the maximum allowed threshold, and set the selected value as predefined initialization threshold 412. By way of example, if predefined altitude threshold 414 is 10 centimeters (cm), expected worst case slope is 2 degrees, and horizontal range of a point is 15cm, then the intermediate threshold can be 40 cm. If the maximum allowed threshold is 30 cm, then processor 107 can select the maximum allowed threshold as predefined initialization threshold 412 for the data point.

Using matrix 120 shown in Fig. 3 as an example, processor 107 can check data points mapped to column 322 from the point of light beam $B_{24}$ to the point of light beam $B_1$. If the point of light beam $B_{24}$ is identified as the closest point to LiDAR device 102 in column 322, then processor 107 may not need to compare the determined altitudes of the data points of light beams $B_5$ to $B_1$ with the estimated flat ground 420. If the point of light beam $B_{24}$ is not identified as the closest point to LiDAR device 102 in column 322, then processor 107 can compare the determined altitude of the point of light beams $B_5$ with the estimated flat ground 420.

In an aspect, if the bottom-most row of a column in matrix 120 represents the lowest elevation angle and the top-most row of the column represents the highest elevation angle, the bottom-most element in the column may not necessarily be the closest point to LiDAR device 102. For example, errors where the light beam corresponding to the bottom-most row failed to reflect back to LiDAR device 102 can cause matrix 120 to include missing data points. In another example, if there is an object on the ground that causes an attitude of the point corresponding to the bottom-most row to be higher than the estimated flat ground 420, then this point may not be identified as a closest point as well.

In the example shown in Fig. 4, if the point of light beam $B_{24}$ is the closest point, then processor 107 can set the determined altitude of the point of light beam $B_{24}$ as the estimated altitude or $h(x1)$. Processor 107 can also determine the slope $s(x1)$ as a slope between the determined altitude of the point of light beam $B_{24}$ and

estimated flat ground 420. Hence, state $state(x1)$ can include height $h(x1)$ and a slope $s(x1)$ of the point of light beam $B_{24}$. Processor 107 can propagate the states $state(x)$ to project the rest of the estimated ground data points. In an aspect, the state propagation can include height propagation and slope propagation. Height propagation can be $h(x + \varDelta x) = h(x) + s(x)\varDelta x$, where $\varDelta x$ denotes a difference between the horizontal ranges of the current point with the previous point. Slope propagation can be $s(x + \varDelta x) = s(x)$. Using the example shown in Fig. 4, the estimated ground point 402-5, corresponding to light beam $B_5$, can have projected height $h(x2) = h(x1 + \varDelta x) = h(24) + s(x1)\varDelta x$ and slope $s(x2) = s(x1 + \varDelta x) = s(x1)$. Processor 107 can use this state propagation to estimate the rest of the estimated ground points 402 forming estimated ground 411.

Further, processor 107 can initialize a covariance $cov(state)$ of Kalman filter 410. In an aspect, the covariance of Kalman filter 410 can be initialized by estimating variances in height and slope from 1) a height of LiDAR device 102 and/or a vehicle including LiDAR device 102 with respect to ground, 2) measurement accuracy of LiDAR device 102 and 3) an expected worst case slope variation (e.g., maximum of 1-degree variation over 2 meters). As shown in Fig. 4, the covariance of Kalman filter 410 can be a 2x2 matrix including a height covariance $P_h$, a slope covariance $P_s$ and cross-variance $P_\times$. In an aspect, the height covariance $P_h$ can be initialized to a sum of the standard deviations of the height of LiDAR device 102 and the vehicle including LiDAR device 102, the slope covariance $P_s$ can be initialized to zero, and the cross-variance $P_\times$ can be initialized to a standard deviation of an initial slope, such as slope $s(x1)$.

In response to determination of estimated ground points 402 using the state propagation described above, and the initialization of the covariance of Kalman filter 410, Kalman filter 410 is initialized. Processor 107 can use the initialized Kalman filter 410 to determine whether data points in LiDAR dataset 110 represent ground points or non-ground points.

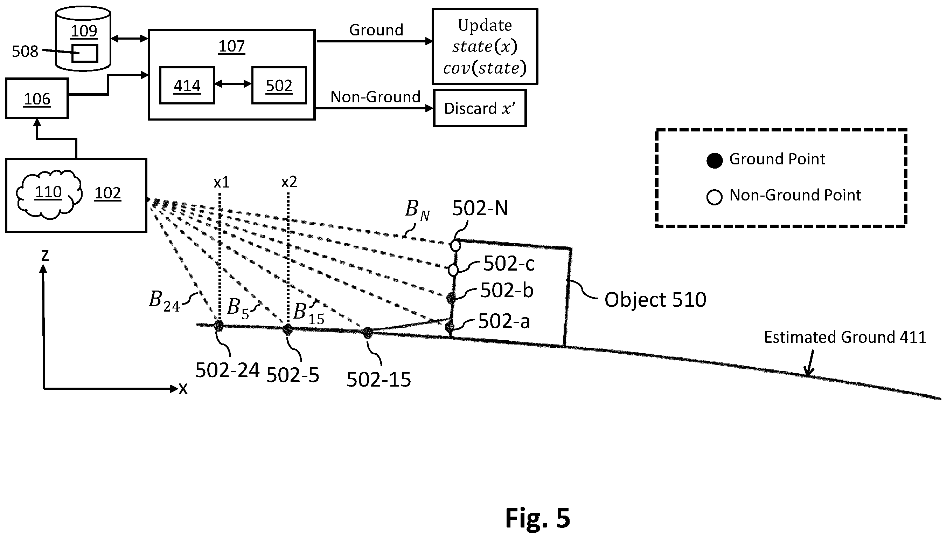

Fig. 5 is a diagram showing an example of ground filtering of data points in a LiDAR point cloud in one embodiment. Descriptions of Fig. 5 may reference components shown in Fig. 1 to Fig. 4. A ground point can be a point corresponding to physical location on the ground that reflected a corresponding light beam. A non-ground point can be a point corresponding to a physical location that is not on the ground and reflected a corresponding light beam. In an example shown in Fig. 5, a plurality of data points 502 of LiDAR dataset 110 can be processed by processor 107 to determine whether data points 502 represent ground points or non-ground points.

To determine whether a point is a ground point or a non-ground point, processor 107 can check the data points having the same azimuth angle iteratively from the lowest elevation to the highest elevation. Processor 107 can determine an altitude difference between a determined altitude of the point (e.g., altitudes 202-1,...,202-N in Fig. 2) and a corresponding (e.g., having same horizontal range x) estimated ground point (e.g., 402 in Fig. 4), and compare the altitude difference with predefined altitude threshold 414. By way of example, a determined altitude for a point 502-24 of light beam $B_{24}$ can be compared to estimated ground point 402-24 (shown in Fig. 4) to determine the altitude difference. If an altitude difference is less than or equal to predefined altitude threshold 414, then processor 107 can determine that the point is a ground point. If the altitude difference is greater than predefined altitude threshold 414, then processor 107 can determine that the point is a non-ground point.

In one embodiment, the data points 502 shown in Fig. 5 can have the same azimuth angle, or in the same column in matrix 120 (e.g., column 322 in Fig. 3). Processor 107 can check the data points from the lowest elevation (e.g., bottom-most row) to the highest elevation (e.g., top-most row). By way of example, processor 107 can determine whether data point 502-24 represents a ground point or a non-ground point before determining whether data point 502-5 represents a ground point or a non-ground point. In one embodiment, if processor 107 determines a point represents a ground point, and determines a next point represents a non-ground point, then processor 107 can determine that the rest of the data points having the same azimuth angle represent non-ground points. By way of example, in the example shown in Fig. 5, after processor 107 determines that data point 502-b represents a ground point and 502-c is a non-ground point, processor 107 can determine that data point 502-N also represents a non-ground point and may not check data point 502-N, such as not comparing a difference between the determined altitude of data point 502-N and its corresponding estimated ground point with predefine altitude threshold 414. In one embodiment, processor 107 can store ground data 508 in memory device 109, where ground data 508 can include data identifying which the data points in LiDAR dataset 110 represent ground points and which represent non-ground data points.

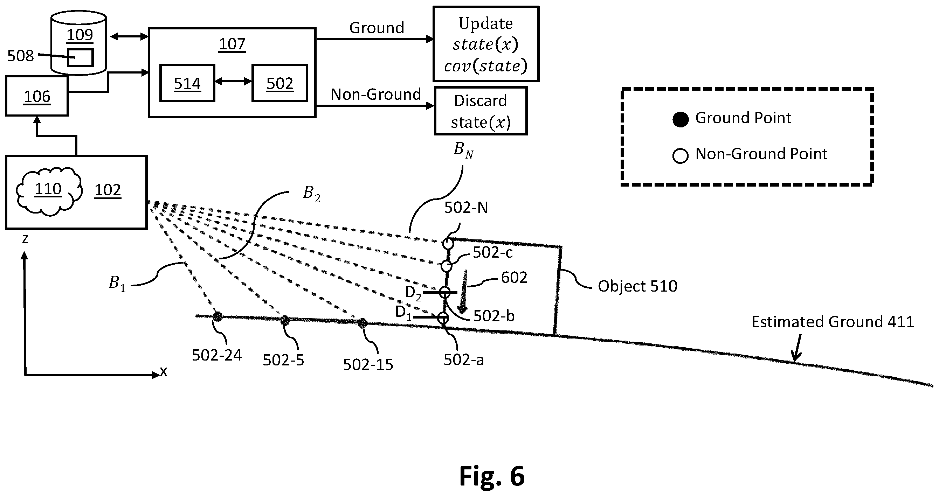

In one embodiment, in response to determining a point is a ground point, processor 107 can update the state of the point and update the covariance of Kalman filter 410 based on the updated state of the point. By way of example, as shown in Fig. 5, processor 107 can determine that data points 502-24, 502-5, 502-15, 502-a, 502-b represent ground points and can update the Kalman state of these data points. Note that in the example shown in Fig. 5, data points 502-a and 502-b appear to be on an object 510 and appear to be mistaken as ground data points. To be described in Fig. 6 below, processor 107 can perform a backwards check to verify whether the determined ground points are correct or incorrect. In response to determining a point is a non-ground point, processor 107 can discard, such as not updating, the state of the point. The covariance of Kalman filter 410 can remain unchanged in response to determining the point is a non-ground point. By way of example, as shown in Fig. 5, processor 107 can determine that data points 502-2c and 502-N are non-ground points and discard the Kalman state of these data points representing non-ground points. The update of states and covariance of Kalman filter 410 can update the estimated ground points 402 and estimated ground 411. By way of example, if predefined altitude threshold 414 is 10 cm, and a difference between the determined altitude of point 502-15 and its corresponding estimated ground point is 1cm, then the state of point 502-15 can be updated to reflect that the estimated ground at the horizontal range of point 502-15 shall be 1cm higher above ground. The update to the states and covariance of Kalman filter 410 can refine the accuracy of the estimated ground 411.

Fig. 6 is a diagram showing an example of a backwards check in ground filtering of data points in a LiDAR point cloud in one embodiment. Descriptions of Fig. 6 may reference components shown in Fig. 1 to Fig. 5. In one embodiment, if processor 107 determines a point to be a ground point, and determines a next point to be a non-ground point, then processor 107 can perform a backwards check 602 verify whether the data points representing ground points truly represent ground points or shall be associated with non-ground points. By way of example, in the example shown in Fig. 5, after processor 107 determines that data point 502-b is a ground point and 502-c is a non-ground point, processor 107 can determine that point 502-N is also a non-ground point and perform backwards check 602 shown in Fig. 6.

Backwards check 602 can include checking data points having same azimuth angle iteratively from higher elevation angle to lower elevation angle, and from the first non-ground point determined to the first ground point determined in backwards check 602. In the examples shown in Fig. 5 and Fig. 6, processor 107 can perform backwards check 602 in the order of data points 502-c, 502-b, 502-a, 502-15. Processor 107 can stop backwards check 602 in response to determining point 502a is a non-ground point and subsequently determining point 502-15 is a ground point. In the example shown in Fig. 6, as a result of performing backwards check 602, processor 107 can determine that data points 502-c and 502-b were mistakenly identified as ground points and that data points 502-c and 502-b shall be non-ground points. Processor 107 can also update ground data 508 in memory device 109 to make the correction that data points 502-c and 502-b are non-ground points. Backwards check 602 can ensure that data points of light beams reflected by an object are not considered ground and also provide an opportunity to correct data points that may be mistakenly determined as ground points.

In one embodiment, backwards check 602 can include comparing a difference between a determined altitude of a point and a corresponding estimated ground point with a modified predefined altitude threshold 514. Modified predefined altitude threshold 514 can be less than predefined altitude threshold 414. The usage of a smaller predefined altitude threshold in backwards check 602 can increase a chance to correct any data points that are mistakenly identified as ground points. By way of example, a vertical distance (y-direction) between point 502-a and its corresponding estimated ground point can be $D_1$ and a vertical distance between point 502-b and its corresponding estimated ground point can be $D_2$. If $D_1$ is 9 cm, $D_2$ is 8 cm, predefined altitude threshold 414 is 10 cm and modified predefined altitude threshold 514 is 7cm, then $D_1$ and $D_2$ are greater than modified predefined altitude threshold 514 in backwards check 602 and data points 502-a, 502-b can be determined by processor 107 as non-ground points. In response to correcting ground data 508 of data points 502-a and 502-b, processor 107 can also discard the states of data points 502-a and 502-b in Kalman filter 410 to update estimated ground 411.

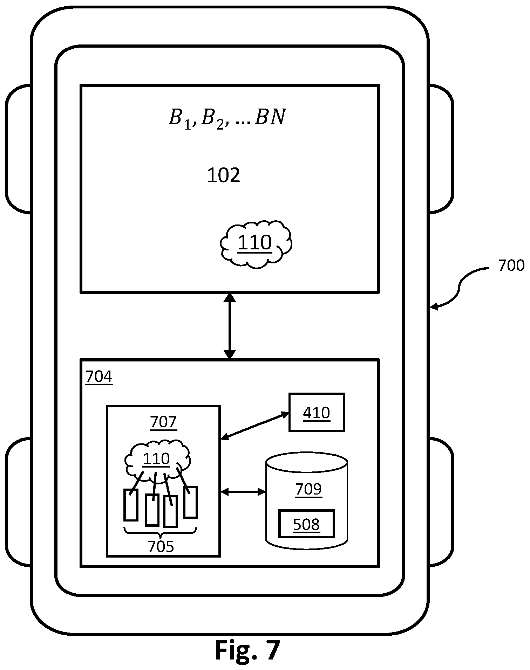

Fig. 7 is a diagram showing an example system that can implement ground filtering of LiDAR point data in one embodiment. Descriptions of Fig. 7 may reference components shown in Fig. 1 to Fig. 6. System 700 can be a computing system implemented in vehicles, including autonomous vehicles and non-autonomous vehicles. System 700 can include LiDAR device 102 and one or more controller 704. In one embodiment, controller 704 can include one or more processors, such as a processor 707. In one embodiment, controller 704 can be a microcontroller built into a single integrated circuit (IC) including one or more processors (or a multicore processor with multiple cores), memory devices (e.g., volatile and/or non-volatile memory), such as a memory device 709, input/output (I/O) controls and interfaces, network components and interfaces, or other electronic components. In one embodiment, processor 707 can be a processor configured or programmed to perform a specific task. In one embodiment, processor 707 can be a processor core in a multicore processor. In one embodiment, controller 704 can be a SoC IC and processor 707 can communicate with other processors in the SoC IC via digital interfaces and various types of communication bus, such as RS-485, I2C, CAN bus, or other types of communication bus.

Similar to processor 107 described herein, processor 707 can be a ground filtering processor configured to determine whether data points in LiDAR dataset 110 are ground points or non-ground points. In one embodiment, LiDAR device 102 can send LiDAR dataset 110 to processor 707 and processor 707 can determine whether data points in the received LiDAR dataset 110 are ground points or non-ground points. To determine whether data points in the received LiDAR dataset 110 are ground points or non-ground points, processor 707 can be configured to perform the various tasks in Fig. 4, Fig. 5 and Fig. 6.

By way of example, to initialize Kalman filter 410 shown in Fig. 4, processor 707 can determine different groups 705 of data points in LiDAR dataset 110 based on azimuth angles 208-1,... ,208-N, such that each one of groups 705 correspond to a specific azimuth angle. For each one of groups 705, processor 707 can sort the group's data points from the lowest elevation to the highest elevation. After the sorting, processor 707 can check the data points in the group iteratively from the lowest elevation to the highest elevation to identify a point in the group that is closest to LiDAR device 102. Processor 707 can check the data points in a group from the lowest elevation to the highest elevation until a point satisfies the condition where a difference between its determined altitude and the estimated flat ground 420 is less than or equal to the predefined initialization threshold 412. The first point in a group that satisfies this condition can be identified as the point closest to LiDAR device 102 in the group. In response to identifying the closest point in the group, processor 707 may stop checking data points in the group and proceed to check data points in a next group among groups 705.

Further, to check whether data points in LiDAR dataset 110 is a ground point or a non-ground point as shown in Fig. 5, processor 707 can check the data points in a group iteratively from the lowest elevation to the highest elevation. Furthermore, memory device 709 can be configured to store ground data 508. Processor 707 can be configured to update ground data 508 in response to determining ground points and non-ground points as shown in Fig. 5. For the backwards check 602 shown in Fig. 6, processor 707 can check data points in the group iteratively from higher elevation angle to lower elevation angle, and from the first non-ground point determined to the first ground point determined in backwards check 602.

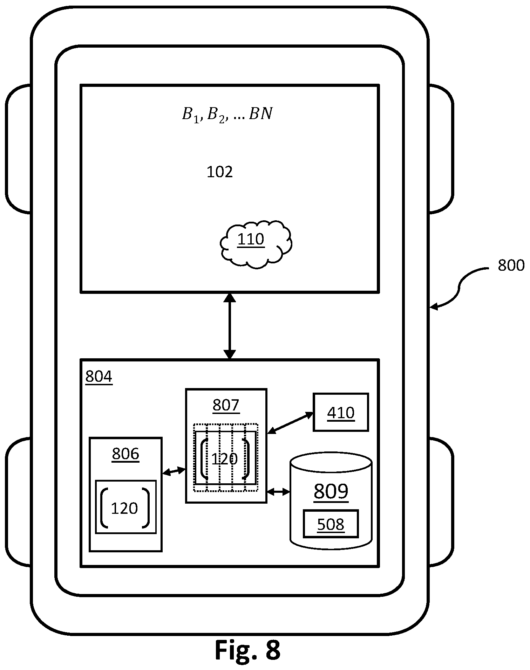

Fig. 8 is a diagram showing another example system that can implement ground filtering of LiDAR point data in one embodiment. Descriptions of Fig. 8 may reference components shown in Fig. 1 to Fig. 7. System 800 can be a computing system implemented in vehicles, including autonomous vehicles and non-autonomous vehicles. System 800 can include LiDAR device 102 and one or more controller 804. In one embodiment, controller 804 can include one or more processors, such as a processor 806 and a processor 807. In one embodiment, controller 804 can be a microcontroller built into a single integrated circuit (IC) including one or more processors (or a multicore processor with multiple cores), memory devices (e.g., volatile and/or non-volatile memory), such as a memory device 809, input/output (I/O) controls and interfaces, network components and interfaces, or other electronic components. In one embodiment, processors 806, 807 can be processors configured or programmed to perform a respective tasks. In one embodiment, processors 8006, 807 can be processor cores in a multicore processor. In one embodiment, controller 804 can be a SoC IC and processors 806, 807 can communicate with one another in the SoC IC via digital interfaces and various types of communication bus, such as RS-485, I2C, CAN bus, or other types of communication bus.

Similar to processor 106 described herein, processor 806 can be a matrix mapping processor configured to map data points in LiDAR dataset 110 to matrix 120. Processor 806 can receive LiDAR dataset 110 from LiDAR device 102 and map the data points in LiDAR dataset 110 to matrix 120, as shown in Fig. 2. Similar to processor 107 described herein, processor 807 can be a ground filtering processor configured to determine whether data points in LiDAR dataset 110 are ground points or non-ground points. In one embodiment, processor 806 can send matrix 120 to processor 807 and processor 807 can determine whether data points mapped to matrix 120 are ground points or non-ground points. To determine whether data points mapped to matrix 120 are ground points or non-ground points, processor 707 can be configured to perform the various tasks in Fig. 4, Fig. 5 and Fig. 6.

By way of example, to initialize Kalman filter 410 shown in Fig. 4, processor 807 can check data points mapped to a column of matrix 120 from the lowest elevation to the highest elevation. The check can be performed column by column until all columns in matrix 120 are checked. The check of each one column is independent from other columns, and due to the independence, the column by column check can allow a system to check individual column in parallel, potentially freeing more time for later processing such as classification, object creation, motion planning, actuation, or other tasks that can use the results from the ground filtering described herein. If LiDAR device 102 is mounted in an upright position, then for a j-th column in matrix 120, processor 807 can check from the bottom-most row of matrix 120 to the top-most row of matrix 120 to identify a point in the j-th column that is closest to LiDAR device 102. If LiDAR device 102 is mounted in an upside-down position, then for a j-th column in matrix 120, processor 807 can check from the top-most row of matrix 120 to the bottom-most row of matrix 120 to identify a point in the j-th column that is closest to LiDAR device 102. Processor 807 can check the data points mapped to the j-th column from the lowest elevation to the highest elevation until a point satisfies the condition where a difference between its determined altitude and the estimated flat ground 420 is less than or equal to the predefined initialization threshold 412. The first point in the j-th column that satisfies this condition can be identified as the point closest to LiDAR device 102 in the j-th column. In response to identifying this first point, processor 807 may stop checking data points mapped to the j-th column and proceed to check data points mapped to a next column of matrix 120, such as the (j+1)-th column.

Further, to check whether data points in LiDAR dataset 110 is a ground point or a non-ground point as shown in Fig. 5, processor 807 can check the data points in a column iteratively from the lowest elevation to the highest elevation. Further, memory device 809 can be configured to store ground data 508. Processor 807 can be configured to update ground data 508 in response to determining ground points and non-ground points as shown in Fig. 5. For the backwards check 602 shown in Fig. 6, processor 807 can check data points in the column iteratively from higher elevation angle to lower elevation angle, and from the first non-ground point determined to the first ground point determined in backwards check 602.

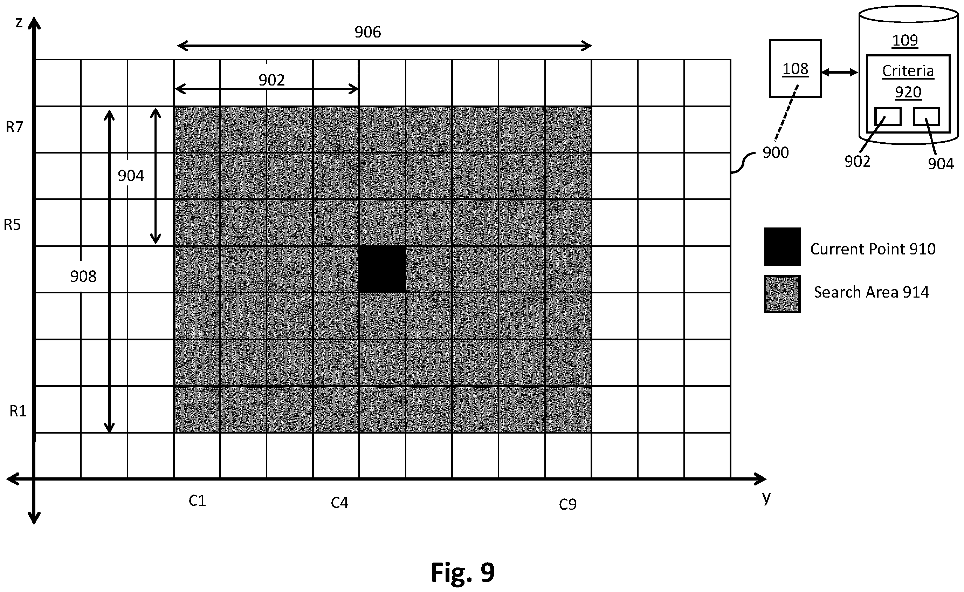

Fig. 9 is a diagram showing an example search area for clustering LiDAR point data in one embodiment. Descriptions of Fig. 9 may reference components shown in Fig. 1 to Fig. 8. A portion 900 of data points in LiDAR dataset 110 is shown in Fig. 9. Data points in portion 900 can be arranged according to the azimuth angles (e.g., 208-1,...,208-N in Fig. 2) and elevations angles (e.g., 206-1,...,206-N in Fig. 2). In one embodiment, portion 900 can be a digital representation of a LiDAR image that can be rendered from a portion LiDAR dataset 110, and each box or point in portion 900 can correspond to one of the N light beams. In an embodiment shown in Fig. 9, data points in portion 900 can be arranged in rows and columns, where rows correspond to the elevation angles and columns correspond to the azimuth angles. In the embodiment shown in Fig. 9, the LiDAR sensor in LiDAR device 102 is mounted upside down, such that columns on the left (e.g., towards column C1) is closer to LiDAR device 102 and rows on the bottom are closer to ground and have lower elevation angles (e.g., towards row R1).

Processor 108 can be configured to cluster data points in LiDAR dataset 110. To perform the clustering, processor 108 can perform a neighbor check on the data points in an iteratively manner to identify neighbor points. A neighbor check of a data point can be a check to identify neighbor points of the data point. In one embodiment, processor 108 can check data points that are determined to be non-ground points and ignore data points that are determined to be ground points. In an aspect, data points that are clustered by processor 108 can form a cluster. A cluster can be a plurality of data points among LiDAR dataset 110 that are relatively close to one another, and can represent one or more physical objects that can reflect the N light beams and that are not physical ground. When two data points belong to the same cluster, processor 108 can designate them as neighbors or neighbor points and the neighbor points can collectively be referred to as a neighborhood.

To identify neighbors of a point, processor 108 can determine a search area surrounding the point. In an embodiment shown in Fig. 9, processor 108 can determine a search area 914 of a current point 910 being checked. Current point 910 can be a non-ground point located at column C5 and row R4. Search area 914 can include data points that can be compared with current point 910 in order to identify neighbors of current point 910. In one embodiment, processor 108 can compare all data points in search area 914 with current point 910. In another embodiment, processor 108 can compare data points in search area 914 that are non-ground points (if the information is given or accessible to processor 108) with current point 910.

In one embodiment, a size of search area 914 can be based on a criteria 920 stored in memory device 109. In an aspect, the size of a search area can be defined by a number of rows and a number of columns in the search area. In one embodiment, criteria 920 can indicate a number of rows and a number of columns to be included in search area 914. Criteria 920 can further indicate a column parameter 902 and a row parameter 904. Processor 108 can determine search area 914 for current point 910, and other search areas for other data points, using criteria 920.

By way of example, criteria 920 can indicate a number of columns in search area 914 is (2 x column parameter 902) + 1 and a number of rows in search area 914 is (2 x row parameter 904) + 1. If column parameter 902 is 4 columns and row parameter 904 is 3 rows, then search area 914 can include 9 columns (e.g., a width 906 of 9 columns) and 7 rows (e.g., a height 908 of 7 rows). Further, criteria 920 can specify a location of current point 910 in search area 914, such as being at a center of search area 914. In an aspect, the center of search area 914 can be positioned at a column equivalent to half of (width 906 - 1) at a row equivalent to half of (height 908 - 1). In one embodiment, criteria 920, column parameter 902 and row parameter 904 can be adjustable and can be dependent on at least one or more factors including, but not limited to, acceptable hole size for any potential holes in the search area, a radius of a scan area of LiDAR device 102, resolution of LiDAR device 102 in the vertical direction (e.g., z-direction in Fig. 2), and/or horizontal direction (e.g., y-direction in Fig. 2), or other factors described herein. The acceptable hole size can be an acceptable distance between two data points belonging to the same object in a single row or a single column.

Column parameter 902 and row parameter 904 can be also be adjustable. In one embodiment, processor 108 can set column parameter 902 as:

$$\frac{G_{hole}}{(r_{LiDAR})(Res_y)}$$

where $G_{hole}$ denotes the acceptable hole size, $r_{LiDAR}$ denotes the radius of a scan area of LiDAR device 102 and $Res_y$ denotes a resolution of LiDAR device 102 in the horizontal direction.

In another embodiment, processor 108 can refine column parameter 902 by adding a minimum bound, such as a minimum search area size, and a maximum bound, such as a maximum search angle. The minimum bound can define a minimum search area size in order for a minimum amount of data points to be checked for identifying neighbors of current point 910. In an aspect, as the range of two data points in different columns or rows increases, the distance between the two data points can also increase and can become larger than the acceptable hole size. Therefore, the acceptable hole size can be adjustable and the size of the search area can be dependent on the acceptable hole size in order to reduce the chance that data points having relatively large range could be omitted from the check for neighbors. The maximum bound can define a maximum search area size to prevent the size of the search area to become too large for short range data points. In an aspect, as the range of two data points in different columns or rows decreases, the distance between the two data points can also decrease. For these short range data points, a relatively small search area may be sufficient. If too large of a search area is being used for short range data points, then a risk of wasting processing power and time can increase.

A refinement of column parameter 902 can be based on a predefined minimum search size $S_{min}$ and a maximum search angle $A_{max}$. To refine column parameter 902, processor 108 can make a first selection to select the greater value out of $\frac{G_{hole}}{(r_{LiDAR})(Res_y)}$ and $S_{min}$, then make a second selection to select the smaller value out of the first selection and $\frac{A_{max}}{(Res_x)}$. Processor 108 can add a 1 to the second selection to yield the refined column parameter 902. In summary, the refined column parameter 902 can be denoted as:

$$1 + min\left(\frac{G_{hole}}{(r_{LiDAR})(Res_y)}, S_{min}\right), \frac{A_{max}}{(Res_y)}$$

Processor 108 can also set row parameter 904 as:

$$\frac{G_{hole}}{(r_{LiDAR})(Res_z)}$$

where $G_{hole}$ denotes the acceptable hole size, $r_{LiDAR}$ denotes the radius of a scan area of LiDAR device 102 and $Res_z$ denotes a resolution of LiDAR device 102 in the vertical direction.

Processor 108 can refine row parameter 904 by adding the minimum bound $S_{min}$ and the maximum bound $A_{max}$. To refine row parameter 904, processor 108 can make a first selection to select the greater value out of $\frac{G_{hole}}{(r_{LiDAR})(Res_z)}$ and $S_{min}$, then make a second selection to select the smaller value out of the first selection and $\frac{A_{max}}{(Res_z)}$. Processor 108 can add a 1 to the second selection to yield the refined column parameter 902. In summary, the refined row parameter 904 can be denoted as:

$$1 + min\left(\frac{G_{hole}}{(r_{LiDAR})(Res_z)}, S_{min}\right), \frac{A_{max}}{(Res_z)})$$

The refinement of column parameter 902 and row parameter 904 can allow processor 108 to detects potential holes of specific sizes while maintaining efficiency and accuracy of the search for neighbor points. Note that the value of 1 is added to the second selection in order to ensure that a minimum search area is defined at all times. The minimum search area $S_{min}$ can also determine the search area's dimensions used by processor 108 to identify potential holes. In an aspect, an object relatively close to LiDAR device 102 can have short range data points, and the object may have a smaller chance of having holes in an LiDAR image such as portion 900. Therefore, the maximum bound can allow processor 108 to limit a size of the search area or short range data points in order to reduce processing time and power during the clustering.

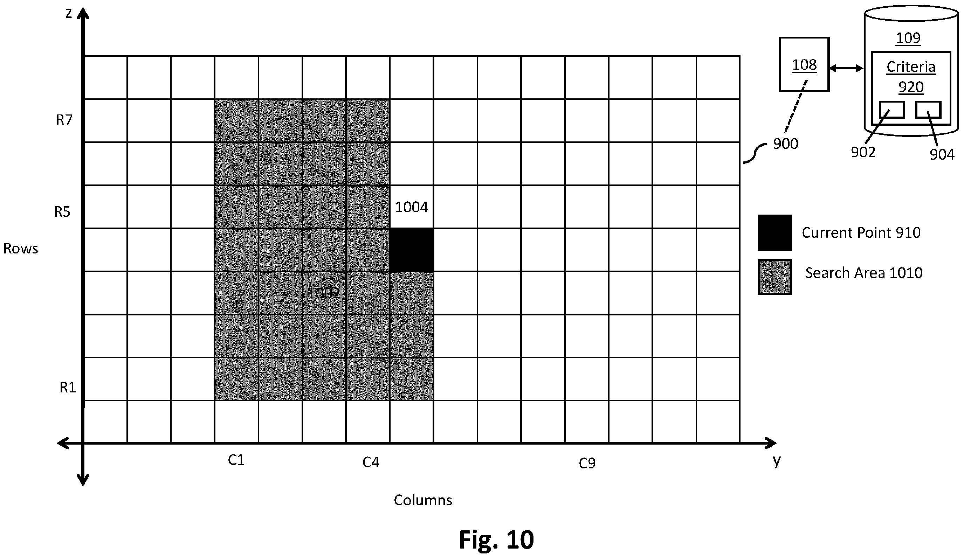

Fig. 10 is a diagram showing an example of a filtered search area for clustering LiDAR point data in one embodiment. Descriptions of Fig. 10 may reference components shown in Fig. 1 to Fig. 9. In one embodiment, in response to determining search area 914 for current point 910, processor 108 filter search area 914 to reduce a number of data points that needs to be checked for being a neighbor point or not. The filtering performed by processor 108 can reduce processing power and time. Search area 914 in Fig. 9 can be an unfiltered search area, and search area 1010 in Fig. 10 can be a filtered search area filtered from search area 914. In one embodiment, all data points in search area 1010 can be data points that are already checked by processor 108 (e.g., data points that already have neighbors identified by processor 108).

In one embodiment, processor 108 can check the data points in search area 914 in a column by column manner then subsequently in a row by row manner. By way of example, processor 108 can check a point (e.g., identify neighbors of the point) located at (R1, C1), then (R2, C1), until all data points in column C1 are checked, then move on to column C2 and check (R1, C2), then (R2, C2), and so on. Hence, all data points in portion 900 can be checked twice. Further, data points that are already checked can become part of a search area of another point.

By way of example, a point 1002 in Fig. 10 is within search area 914 for current point 910, and current point 910 can also be within an unfiltered search area of checked point 1002. In other words, current point 910 and point 1002 can have overlapping unfiltered search areas. If a search area for point 1002 has the same size as search area 914, and if the search area for point 1002 is not filtered, then processor 108 would include current point 910 as part of the check for point 1002. It may be redundant for processor 108 to include point 1002 when checking current point 910. Thus, overlapping search areas can sometimes create instances where processor 108 performs redundant checks, such as checking a point four times, which may be undesirable due to increased processing power and time.

Therefore, processor 108 can be configured to filter search area 914 into search area 1010 shown in the example in Fig. 10. In one embodiment, due to processor 108 iterating column by column starting from column C1 and then row by row starting from row R1, processor 108 can stop the iteration at current point 910 if current point 910 is being checked. Processor 108 can move on to check a next point 1004 at column C5 and row R5. Therefore, during the check of current point 910, point 1004 was not checked against current point 910 because processor 108 filtered point 1004 out when filtering search area 914 to search area 1010. When processor 108 checks point 1004, current point 910 can be in the search area for point 1004 and processor 108 can determine whether current point 910 and point 1004 are neighbors or not.

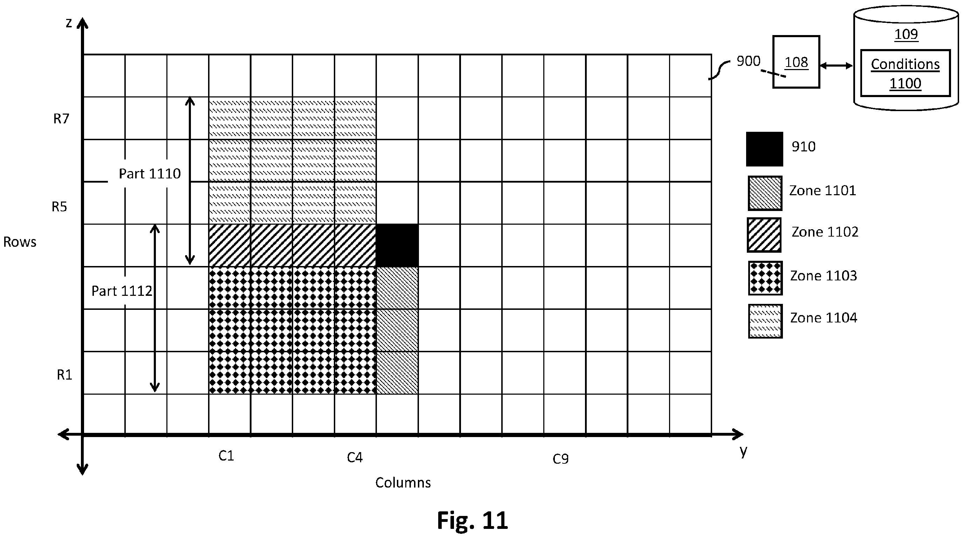

Fig. 11 is a diagram showing an example of clustering LiDAR point data using a plurality of zones in a filtered search area in one embodiment. Descriptions of Fig. 11 may reference components shown in Fig. 1 to Fig. 10. In one embodiment, processor 108 can be configured to partition filtered search area 1010 shown in Fig. 10 into a plurality of zones and iterate through the plurality of zones in a predefined order to identify neighbors of current point 910. In an embodiment shown in Fig. 11, processor 108 can partition search area 1010 into zones 1101, 1102, 1103, 1104. Zone 1101 can include data points that are already checked and in the same column as current point 910. For example, zone 1101 can include data points located at (R1, C5), (R2, C5) and (R3, C5). Zone 1102 can include data points that are already checked and in the same row as current point 910. For example, zone 1102 can include data points located at (R4, C1), (R4, C2), (R4, C3) and (R4, C4). Zone 1103 can include data points that are already checked and can be bounded by zone 1101 and zone 1102. For example, zone 1103 can include data points located in rows R1, R2, R3 and columns C1, C2, C3, C4. Zone 1104 can include data points that are already checked and can be bounded by zone 1102 and a column of current point 910, such as column C5. For example, zone 1104 can include data points located in rows R5, R6, R7 and columns C1, C2, C3, C4. Processor 108 can further partition search area 1010 into two parts, namely part 1110 and part 1112. Part 1110 can include zone 1102 and zone 1104. Part 1112 can include zone 1102 and zone 1103.

In response to partitioning search area 1010, processor 108 can search data points in the partitioned zones and/or parts using a set of conditions 1100 that can be stored in memory device 109. Conditions 1100 can include a set of rules that can be interpreted by processor 108 to search the partitioned zones in a predefined order and to determine whether to continue or terminate a search based on a progress of the search. The search using conditions 1100 can allow processor 108 to identify neighbor data points under a relatively efficient manner. In one embodiment, conditions 1100 can include a first rule that states if a point B is a neighbor of a point A, then the search area of B is at least as big as the search area of the point A. Conditions 1100 can further include a second rule that states if point B is a neighbor of point A, and a point C is a neighbor of point B, then point A is also a neighbor of point C. Conditions 1100 can further include a third rule that states if point B is a neighbor of point A, and point C is not a neighbor of point B, then point A is also not a neighbor of point C.

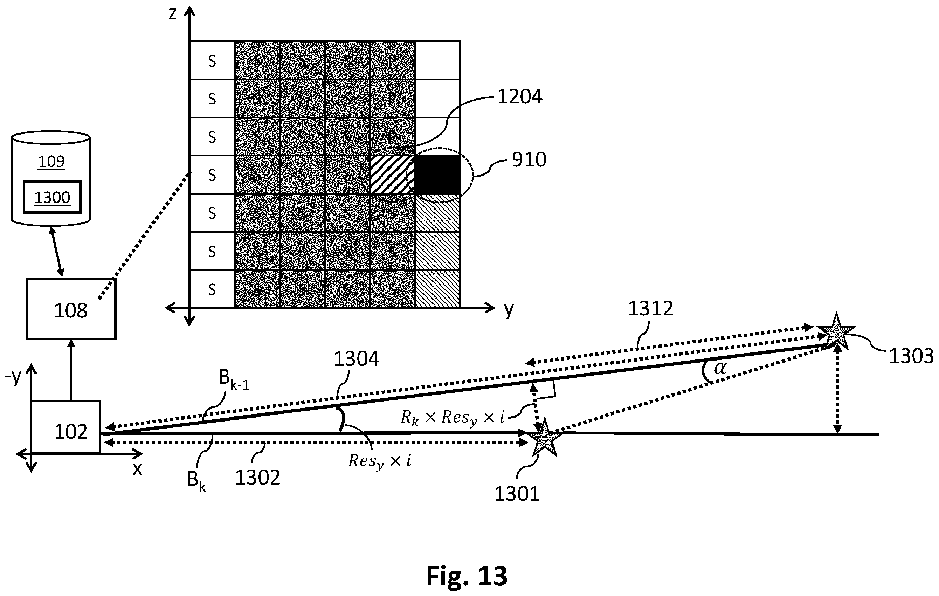

In one embodiment, a predefined search order indicated by conditions 1100 can begin with first zone 1101. In the first zone 1101, processor 108 can search for neighbor points of current point 910 from the closest point to the further point. The closest point can be the point that is closest to current point 910, such as the point at (R3, C5) and the furthest point can be the point that is furthest from current point 910, such as the point at (R1, C5). To identify whether a point is a neighbor point to current point 910 or not, processor 108 can be configured to perform a range check of the point against current point 910. The range check will be described in more detail below in Fig. 13.

If a range check of a point in zone 1101 indicates the point is a neighbor point, then processor 108 can determine that the entirety of part 1112 already undergo range check and proceed to perform range check on zone 1104. The first rule in conditions 1100 states that if a point B is a neighbor of a point A, then the search area of B is at least as big as the search area of the point A. Referring to the example shown in Fig. 11, if any one of the data points at (R3, C5), (R2, C5) and (R2, C5) in zone 1101 is a neighbor of current point 910, then a search area of the neighbor point can also include part 1112. Then according to the second rule, any data points in part 1112 that are already identified as a neighbors of the point undergoing range check are also neighbors of current point 910. Also, according to the third rule, any data points in part 1112 that are already identified as not neighbors of the point undergoing range check point are also not neighbors of current point 910. Therefore, the neighbor data points and non-neighbor data points in part 1112 of any one of the data points in zone 1101 are already known and processor 108 may preserve processing power and time by not performing range check for data points in part 1112.

According to the predefined order indicated by conditions 1100, if at least one neighbor is identified in zone 1101, then processor 108 can proceed to perform range check on data points in zone 1104. If no neighbor is identified in zone 1101, then processor 108 can proceed to perform range check on data points in zone 1102. In the second zone 1102, processor 108 can search for neighbor data points of current point 910 from the closest point to the further point. The closest point can be the point that is closest to current point 910, such as the point at (R4, C4) and the furthest point can be the point that is furthest from current point 910, such as the point at (R4, C1). To identify whether a point is a neighbor point to current point 910 or not, processor 108 can be configured to perform the range check that will be described in more detail below in Fig. 13.

If a range check of a point in zone 1102 indicates the point is a neighbor point, then processor 108 can identify the entirety of part 1110 and part 1112 as checked data points and stop the check on zone 1102 based on the rules in conditions 1100. The first rule states that if a point B is a neighbor of a point A, then the search area of B is at least as big as the search area of the point A. Referring to the example shown in Fig. 11, if any one of the data points at (R4, C4), (R4, C3), (R4, C2) and (R4, C1) is a neighbor of current point 910, then a search area of the neighbor point can also include portions of part 1110 and part 1112.

Using the point at (R4, C1) as example, if the point at (R4, C1) is a neighbor of current point 910, then data points at (R3, C1), (R2, C1) and (R1, C1) are in the search area of the point at (R4, C1) and these data points do not need to undergo range check again. The rest of the data points in part 1110 and part 1112 are data points that are already checked by processor 108, hence it is known whether the point at (R4, C1) is a neighbor or non-neighbor of the rest of the data points in part 1110 and part 1112. Based on the known information of whether the point at (R4, C1) is a neighbor or non-neighbor for the data points in part 1110 and part 1112, processor 108 can stop performing range check on the data points in part 1110 and part 1112 in response to identifying the point at (R4, C1) as a neighbor.

According to the predefined order indicated by conditions 1100, if at least one neighbor is identified in zone 1102, then processor 108 can stop the range check in search area 1010 and proceed to check the next point, or point 1004 in Fig. 10. If no neighbor is identified in zone 1102, then processor 108 can proceed to perform range check on data points in zone 1103. If a neighbor is identified in zone 1103, then processor 108 can stop performing range check on data points in part 1112. If no neighbor is identified in zone 1103, then processor 108 can proceed to perform range check on data points in zone 1104. If a neighbor is identified in zone 1104, then processor 108 can stop performing range check on data points in part 1110. Processor 108 can perform range check on data points in the order of zone 1101, 1102, 1103, 1104.

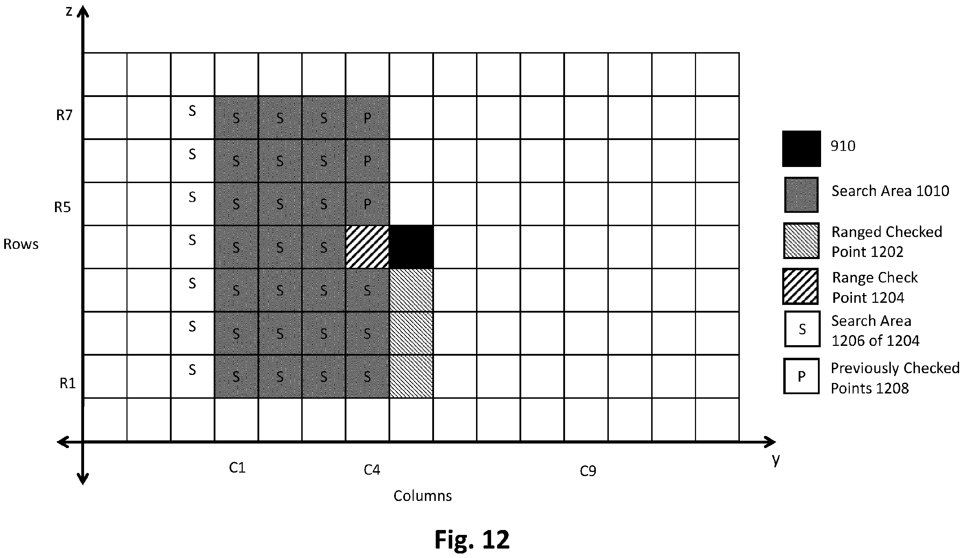

Fig. 12 is a diagram showing another example of clustering LiDAR point data using a plurality of zones in a filtered search area in one embodiment. Descriptions of Fig. 12 may reference components shown in Fig. 1 to Fig. 11. In the example shown in Fig. 12, processor 108 already performed range check on data points 1202 in zone 1101. Processor 108 can perform a range check on a point 1204 at (R4, C4) to determine whether point 1204 is a neighbor or not a neighbor of current point 910. If the range check performed by processor 108 indicates that point 1204 is a neighbor of current point 910, processor 108 can stop performing range check on data points in part 1110 and part 1112 shown in Fig. 11.

As shown in Fig. 12, a portion of a search area 1206 of point 1204 can overlap with the search area of current point 910. Since point 1204 is a point that was previously checked (e.g., checked for neighbors), the overlapped portions between the two search areas include data points that already underwent range check when processor 108 checked point 1204. Further, point 1204 already underwent range check when processor 108 checked a plurality of previously checked data points 1208. Therefore, processor 108 can access known information on whether point 1204 is a neighbor or not a neighbor of data points 1208. Therefore, if point 1204 is determined to be a neighbor of current point 910, processor 108 does not need to check the rest of zone 1102 and parts 1110, 1112.

In one embodiment, if no neighbors are found for every point in search area 914 shown in Fig. 9, then processor 108 would iterate through all data points in search area 914. Since the neighbor search and clustering can be independent of a size of LiDAR dataset 110, the time complexity for the neighbor search and clustering can be in the order of O(n), where n is the size of LiDAR dataset 110. This time complexity is less than the time complexity, such as O(n²), of other systems that need to check every single pair of data points in LiDAR dataset 110. For example, if $Res_y$ is 0.35 degrees, $Res_z$ is 0.7 degrees and $A_{max}$ is 6 degrees, then the reduced search area 1010 in Fig. 10 can include 351 data points. If LiDAR dataset 110 includes 131,072 data points, processor 108 can perform 46,006,272 iterations. However, a system that has time complexity of O(n²) would yield approximately 17,179,869,184 iterations which is approximately 373 times more than the iterations that can be performed by processor 108. In an example, if one neighbor is identified in zone 1101 and one neighbor is identified in zone 1102, then only two data points would have underwent the range check in search area 1010, which would be approximately 65536 times faster than a O(n^2) equivalent. For an average of 175 data points range checks performed in search area 1010, that would be approximately 750 times faster than the O(n^2) equivalent.

Fig. 13 is a diagram showing an example of a range check that can be performed in clustering LiDAR point data in one embodiment. Descriptions of Fig. 13 may reference components shown in Fig. 1 to Fig. 12. Processor 108 described herein can perform a range check on a point to determine whether the point is a neighbor or not a neighbor of another point. A range check can include comparing the range of the data points, and based on the comparison result along with various factors such as angles between the data points, processor 108 can determine whether the data points are neighbors or not.

In an example shown in Fig. 13, processor 108 can perform a range check on point 1204 to determine whether point 1204 is a neighbor or current point 910 or not. In one embodiment, current point 910 can correspond to a light beam $B_k$, where light beam $B_k$ can be reflected by an object 1301 and current point 910 can have a range 1302. Point 1204 can correspond to a light beam $B_{k-1}$, where light beam $B_{k-1}$ can be reflected by an object 1303 and point 1204 can have a range 1304. Processor 108 can be configured to determine a range difference 1312 between current point 910 and point 1204. Processor 108 can compare the range difference 1312 with a predefined range threshold 1300 to determine whether point 1204 is a neighbor of current point 910 or not. If range difference 1312 is greater than predefined range threshold 1300, then processor 108 can determine that point 1204 is not a neighbor of current point 910. If range difference 1312 is less than or equal to predefined range threshold 1300, then processor 108 can determine that point 1204 is a neighbor of current point 910. Predefined range threshold 1300 can be stored in memory device 109. In one embodiment, predefined range threshold 1300 can be dependent on a maximum acceptable incidence angle between two data points on the same column or row in portion 900.

In one embodiment, range difference 1312 can be denoted as $R_d$ and can be defined as:

$$R_d = \frac{R_k \times Res_y \times i}{\alpha}$$

where $R_k$ denotes the range of the k-th point undergoing the neighbor check, which is this case is range 1302 of current point 910, $Res_y$ is the horizontal resolution (y-direction) of LiDAR device 102, $i$ is an integer that represents a number of columns or rows separating the k-th point and the (k-i)-th point undergoing range check (e.g., point 1204), and $\alpha$ denotes an incidence angle as shown in Fig. 13. The incidence angle $\alpha$ can be an angle between light beam $B_{k-1}$ and a path between object 1301 and object 1303. The value of $R_k \times Res_y \times i$ can define a perpendicular from object 1301 to beam $B_{k-1}$. Note that a tangent of the incident angle, or $tan\ tan\ (\alpha)$, is equivalent to $\frac{R_k \times Res_y \times i}{R_d}$. Due to the maximum bound set on the search area, even a furthest point such as a point at (R4, C1) (see Fig. 12), can produce a relatively small incidence angle $\alpha$. Therefore, processor 108 can determine range difference 1312, or $R_d$, based on a small angle approximation resulting in the relationship

$$R_d = \frac{R_k \times Res_y \times i}{\alpha}.$$

In one embodiment, processor 108 can be configured to determine predefined range threshold 1300 based on the acceptable hole size $G_{hole}$, the radius of the scan area of LiDAR device 102, or $r_{LiDAR}$, and incidence angle $\alpha$. To determine predefined range threshold 1300, processor 108 can select the greater value between $G_{hole}$ and a value of $(i \times r_{LiDAR} \times Res_y)/\alpha$, and set the selected value as predefined range threshold 1300. The selection of the greater value made by processor 108 to set the predefined range threshold 1300 can prevent the predefined range threshold 1300 from becoming too small for shorter range data points.

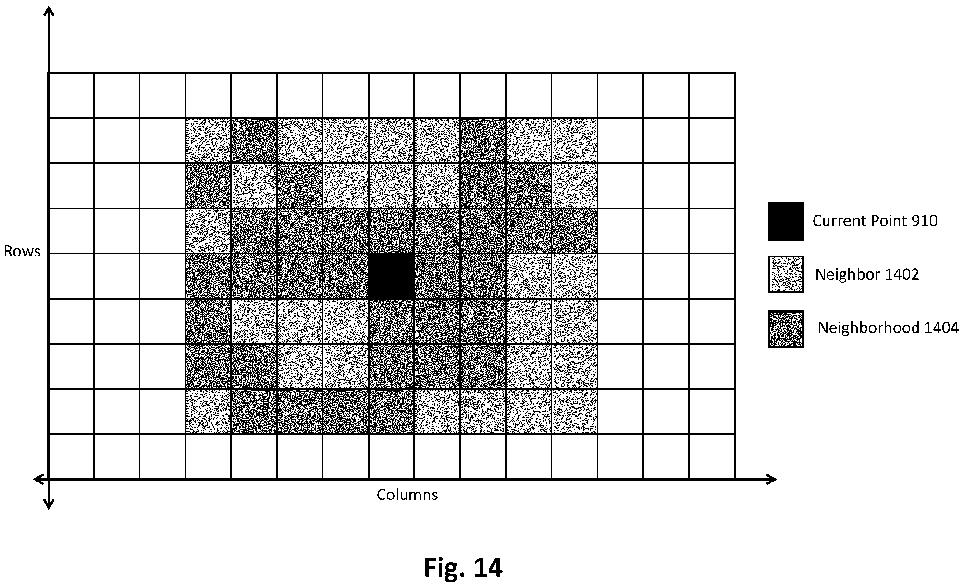

Fig. 14 is a diagram showing an example of identified neighbor data points in clustering LiDAR point data in one embodiment. Descriptions of Fig. 14 may reference components shown in Fig. 1 to Fig. 13. In one embodiment, processor 108 can be configured to link or connect every point in portion 900 to a cluster which it belongs and group the data points into clusters. A number of clusters can be less than the total number of data points. In one embodiment, if processor 108 did not identify any neighbor for current point 910, then processor 108 can create a new cluster and associated current point 910 with the created cluster. If processor 108 identified a first neighbor of current point 910, then processor 108 can link current point 910 with the first neighbor to create a cluster. Processor 108 can link the newly identified neighbors to existing neighbors that are identified after the first neighbor to the created cluster. A plurality of neighbors 1402 that can form clusters are shown in Fig. 14. Neighbors of a cluster can be linked to a cluster to form a neighborhood 1404 shown in Fig. 14.

Processor 108 can be further configured to perform cluster classification. Cluster classification can include classifying clusters into clusters that are greater than a predefined cluster size and clusters that are less than or equal to the predefined cluster size. Processor 108 can estimate an azimuth distance of a cluster that represents a horizontal dimension (e.g., y direction) of the cluster. In one embodiment, processor 108 can estimate the azimuth distance by determining a product of a horizontal resolution of LiDAR device 102 (e.g., resolution in the y direction), a range of all data points in the cluster and a difference between the maximum azimuth angle and the minimum azimuth angle of the cluster. Processor 108 can estimate an elevation distance of a cluster that represents a vertical dimension (e.g., z direction) of the cluster. In one embodiment, processor 108 can estimate the elevation distance by determining a product of a vertical resolution of LiDAR device 102 (e.g., resolution in the z direction), the range of all data points in the cluster and a difference between the maximum elevation angle and the minimum elevation angle of the cluster.

Processor 108 can also estimate an area of the cluster by multiplying the azimuth distance and elevation distance. Processor 108 can compare the area with the predefined cluster size. If the area is greater than the predefined cluster size, then processor 108 can determine to keep the cluster for motion planning of the system (e.g., vehicle) including the LiDAR device 102. If the area is less than or equal to the predefined cluster size, then processor 108 can discard the cluster and not use the cluster for motion planning of the system (e.g., vehicle) including the LiDAR device 102.

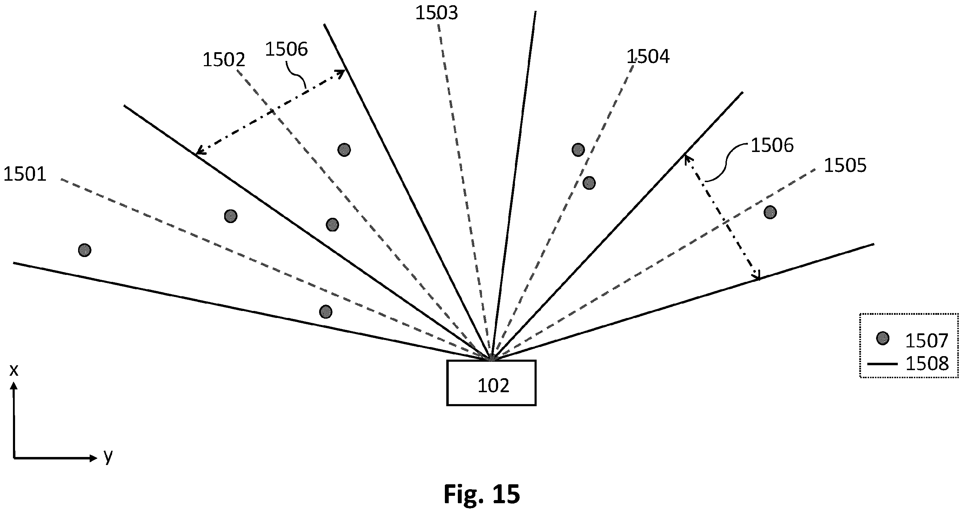

Fig. 15 is a diagram showing an example of sorting points in a cluster for polygon creation in one embodiment. Descriptions of Fig. 15 may reference components shown in Fig. 1 to Fig. 14. In one embodiment, processor 108 can be configured to transform the clusters into a two dimensional (2D) polygon on the horizontal plane (e.g., x-y plane). The 2D polygons created by processor 108 can be polygons non-convex and not self-intersecting, and the minimum and maximum altitude of the data points can also remain the same. Processor 108 can create the 2D polygons using a two-step technique. The first step can include cluster contour creation and the second step can include contour simplification.

In the first step, or cluster contour creation, processor 108 can sort a plurality of points 1507 in a cluster by azimuth angles. The points 1507 can be scattered and can span on different azimuth angle columns. In the top-down view, or x-y plane view, shown in Fig. 15, five azimuth angle columns 1501, 1502, 1503, 1504, 1505 are shown. Azimuth angle columns 1501, 1502, 1503, 1504, 1505 can be separated by boundary lines 1508. Each azimuth angle column corresponds to a specific azimuth angle (represented by the dotted line) and a span, such as 1506 for azimuth angle column 1502, of the azimuth resolution. In an aspect, points in one azimuth angle column can have an actual azimuth angle different with up to approximately half of the azimuth resolution from the azimuth angle of the azimuth angle column. By projecting polygon points on the edge of the azimuth angle column, processor 108 can ensure that the resulting polygon can include all points in the azimuth angle column. Based on the sorting, processor 108 can identify, for each azimuth angle column in the cluster, the minimum and maximum range projected on the x-y plane. A minimum range can be the range of the point among points 1507 that is closest to LiDAR device 102 on the x-y plane. A maximum range can be the range of the point among points 1507 that is furthest from LiDAR device 102 on the x-y plane. In one embodiment, when merging clusters, processor 108 can be configured to run a merge-sort algorithm to merge clusters while keeping the points 1507 sorted in the same manner (e.g., by azimuth angle).

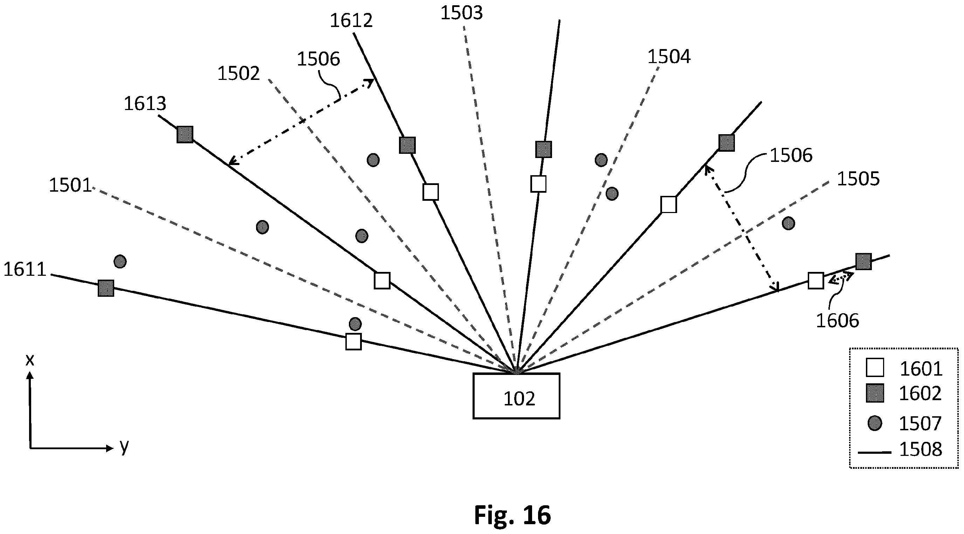

Fig. 16 is a diagram showing an example of contour creation for polygon creation in one embodiment. Descriptions of Fig. 16 may reference components shown in Fig. 1 to Fig. 15. In the second step, or the contour simplification, processor 108 can use the minimum ranges in the azimuth angle columns to determine a front side of the polygon and use the maximum ranges in the azimuth angle columns to determine a back side of the polygon. The front side of the polygon can be the end closer to the y axis or LiDAR device 102 and the back side of the polygon can be the end further from the y axis or LiDAR device 102.

Each pair of adjacent columns, such as azimuth angle columns 1501 and 1502, or azimuth angle columns 1502 and 1053, and so on, can be bounded by two edge boundary lines among boundary lines 1508 and can include a shared boundary line among boundary lines 1508. By way of example, azimuth angle columns 1501 and 1502 can be bounded by two edge boundary lines 1611, 1612 among boundary lines 1508 and can include a shared boundary line 1613 among boundary lines 1508.

Starting from the first column closest to the x axis, which in the example is azimuth angle column 1501, processor 108 can create front polygon points 1601 on boundary lines 1508, where the front polygon points 1601 correspond to the minimum ranges. Processor 108 can also create back polygon points 1602 on boundary lines 1508, where the back polygon points 1602 correspond to the maximum ranges.

Each pair of adjacent columns, processor 108 can position the front polygon points 1601 and the back polygon points 1602 on the edge boundary lines and the shared boundary line. The positioning can be based on the position of the points 1507 on the x-y plane in both columns of the pair of adjacent columns.

Using azimuth angle columns 1501 and 1502 as an example, processor 108 can position front polygon points 1601 on edge boundary line 1611 and shared boundary line 1613 based on the minimum range in azimuth angle column 1501. Processor 108 can position a front polygon point 1601 on edge boundary line 1612 based on the minimum range in azimuth angle column 1502. Processor 108 can position back polygon points 1602 on edge boundary line 1611 and shared boundary line 1613 based on the maximum range in azimuth angle column 1501. Processor 108 can position a back polygon point 1602 on edge boundary line 1612 based on the maximum range in azimuth angle column 1502.

In one embodiment, for a pair of adjacent columns where one of the column does not include points 1507, processor 108 can position the front polygon points 1601 and the back polygon points 1602 depending on the column that includes points 1507. As shown in Fig. 16, a boundary line between azimuth angle columns 1503 and 1054 can include front and back polygon points that correspond to minimum and maximum ranges in azimuth angle column 1054 since azimuth angle column 1503 does not include points 1507.

In one embodiment, if a minimum range and a maximum range are relatively close to one another (e.g., difference being less than a predefined threshold), processor can set the maximum range to a sum of the minimum range and a predefined margin. Processor 108 can connect the front polygon points 1601 to generate a front line, and connect the back polygon points 1602 to generate a back line. Processor 108 can revert the back line and append it to the front line to generate a 2D polygon.

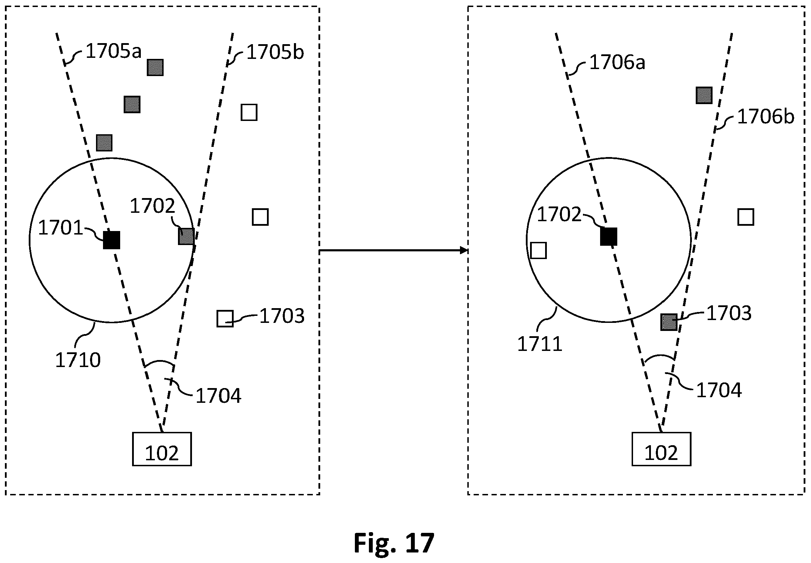

Fig. 17 is a diagram showing an example of polygon simplification in one embodiment. Descriptions of Fig. 7 may reference components shown in Fig. 1 to Fig. 16. Processor 108 can simplify the generated 2D polygon by removing points that do not contribute to the shape of the 2D polygon. The removal of these points can improve the processing speed of processors that uses the created polygons for motion planning and preserve storage space in memory devices (e.g., memory device 109) that stores the created polygons. In one embodiment, processor 108 can be configured to remove points that form relatively small triangles. The removal of small triangles can be implemented using techniques such as the Visvalingam-Whyatt algorithm. In one embodiment, processor 108 can be configured to remove points in specific parts, such as relatively small convex hulls. The points and/or shapes being removed on the front and the back of the polygon can be different from one another.

In one embodiment, to identify convex hulls for removal, processor 108 can set a first point 1701 (e.g., point closest to x axis) on the front line connecting the front polygon points 1601 as a reference point. Processor 108 can create a reference circle 1710 of radius R with the reference point being the center of the circle. In one embodiment, an azimuth limit 1704 can be predefined and processor 108 can set two boundaries 1705a and 1705b that are spaced apart according to the azimuth limit 1704, where boundary 1705a can cross the reference point 1701. Processor 108 can identify points, such as a point 1702, that are between boundaries 1705a, 1705b and inside reference circle 1710.

The identified point 1702 can be used as a new reference point. Processor 108 can create a new reference circle 1711 having the same radius R, and set boundaries 1706a, 1706b that are spaced apart according to azimuth limit 1704, where boundary 1706a can cross the reference point 1702. Processor 108 can identify points that are between boundaries 1706a, 1706b and inside reference circle 1711. In the example shown in Fig. 17, processor 108 may not identify points that are between boundaries 1706a, 1706b and inside reference circle 1711. In response to this failure to identify the points, processor 108 can use a point 1703 for the next reference circle. Point 1703 can be between boundaries 1706a, 1706b and is the first point away from reference circle 1711 between reference circle 1711 and LiDAR device 102. After iterating through the front line, processor 108 can connect the identified reference points to create a convex hull and remove points that are in the convex hull.

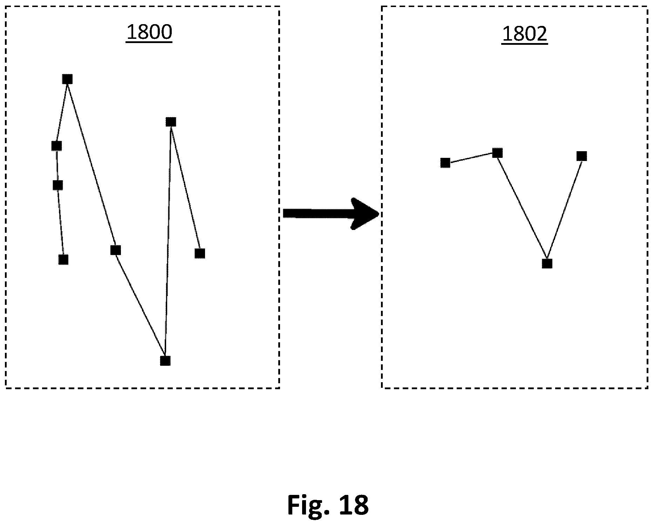

Fig. 18 is a diagram showing a front line and a simplified front line in one embodiment. Descriptions of Fig. 18 may reference components shown in Fig. 1 to Fig. 17. A front line 1800 prior to points removal and a simplified front line 1802 after points removal are shown in Fig. 18. As a result of removing points, a polygon having simplified front line 1802 can include less points. Processors that utilize the polygon with removed points can process a reduced number of data points and memory space for storing the polygon can also be reduced.

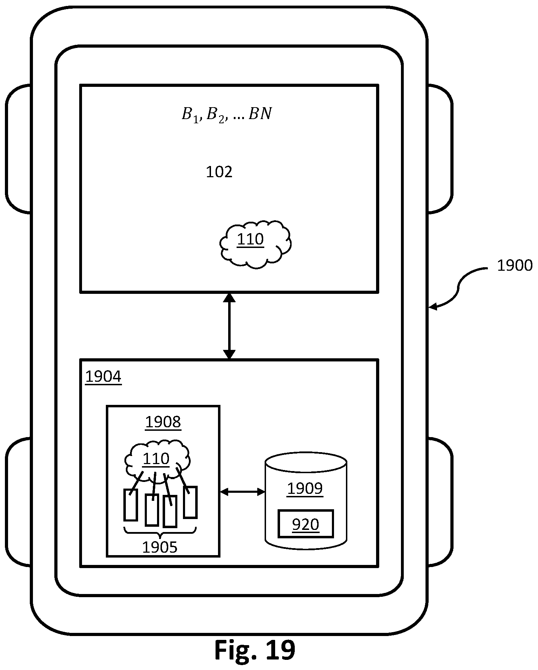

Fig. 19 is a diagram showing an example system that can implement clustering of LiDAR point data in one embodiment. Descriptions of Fig. 19 may reference components shown in Fig. 1 to Fig. 18. System 1900 can be a computing system implemented in vehicles, including autonomous vehicles and non-autonomous vehicles. System 1900 can include LiDAR device 102 and one or more controller 1904. In one embodiment, controller 1904 can include one or more processors, such as a processor 1908. In one embodiment, controller 1904 can be a microcontroller built into a single integrated circuit (IC) including one or more processors (or a multicore processor with multiple cores), memory devices (e.g., volatile and/or non-volatile memory), such as a memory device 1909, input/output (I/O) controls and interfaces, network components and interfaces, or other electronic components. In one embodiment, processor 1908 can be a processor configured or programmed to perform a specific task. In one embodiment, processor 1908 can be a processor core in a multicore processor. In one embodiment, controller 1904 can be a SoC IC and processor 1908 can communicate with other processors in the SoC IC via digital interfaces and various types of communication bus, such as RS-485, I2C, CAN bus, or other types of communication bus.

Similar to processor 108 described herein, processor 1908 can be a clustering processor configured to cluster data points in LiDAR dataset 110. In one embodiment, LiDAR device 102 can send LiDAR dataset 110 to processor 1908 and processor 1908 can cluster data points in the received LiDAR dataset 110. To cluster data points in the received LiDAR dataset 110, processor 1908 can be configured to perform the various tasks in Fig. 9 to Fig. 18.

By way of example, to cluster the data points, processor 1908 can determine different groups 1905 of data points in LiDAR dataset 110 based on azimuth angles 208-1,...,208-N, such that each one of groups 1905 correspond to a specific azimuth angle. For each one of groups 1905, processor 1908 can sort the group's data points from the lowest elevation to the highest elevation. After the sorting, processor 1908 can check the data points in the group iteratively from the lowest elevation to the highest elevation to identify neighbor points of the data point in the group. In response to identifying the neighbor points of data points in the group, processor 1908 may proceed to identify neighbor points for data points in a next group among groups 1905.

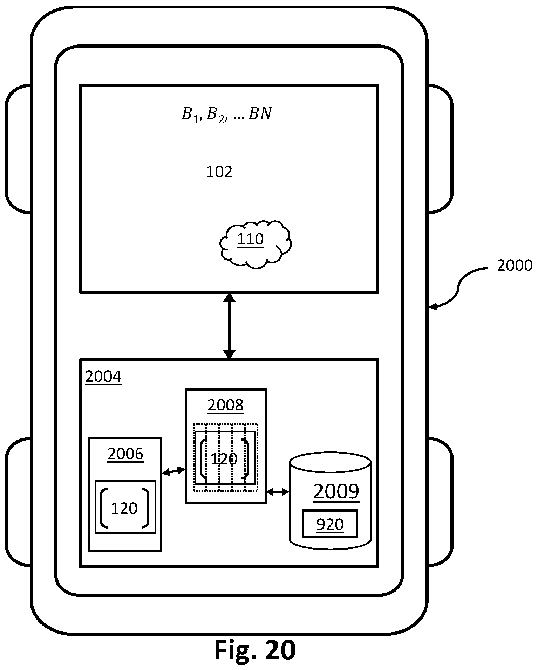

Fig. 20 is a diagram showing another example system that can implement clustering of LiDAR point data in one embodiment. Descriptions of Fig. 20 may reference components shown in Fig. 1 to Fig. 19. System 2000 can be a computing system implemented in vehicles, including autonomous vehicles and non-autonomous vehicles. System 2000 can include LiDAR device 102 and one or more controller 2004. In one embodiment, controller 2004 can include one or more processors, such as a processor 2006 and a processor 2008. In one embodiment, controller 2004 can be a microcontroller built into a single integrated circuit (IC) including one or more processors (or a multicore processor with multiple cores), memory devices (e.g., volatile and/or non-volatile memory), such as a memory device 2009, input/output (I/O) controls and interfaces, network components and interfaces, or other electronic components. In one embodiment, processors 2006, 2008 can be processors configured or programmed to perform a respective tasks. In one embodiment, processors 2006, 2008 can be processor cores in a multicore processor. In one embodiment, controller 2004 can be a SoC IC and processors 2006, 2008 can communicate with one another in the SoC IC via digital interfaces and various types of communication bus, such as RS-485, I2C, CAN bus, or other types of communication bus.

Similar to processor 106 described herein, processor 2006 can be a matrix mapping processor configured to map data points in LiDAR dataset 110 to matrix 120. Processor 2006 can receive LiDAR dataset 110 from LiDAR device 102 and map the data points in LiDAR dataset 110 to matrix 120, as shown in Fig. 2. Similar to processor 108 described herein, processor 2008 can be a clustering processor configured to cluster data points in LiDAR dataset 110. In one embodiment, processor 2006 can send matrix 120 to processor 2008 and processor 2008 can cluster data points mapped to matrix 120. To cluster data points mapped to matrix 120, processor 2008 can be configured to perform the various tasks in Fig. 9 to Fig. 18.

By way of example, to cluster the data points, processor 2008 can check data points mapped to a column of matrix 120 from the lowest elevation to the highest elevation. The check can be performed column by column until all columns in matrix 120 are checked. If LiDAR device 102 is mounted in an upright position, then for a j-th column in matrix 120, processor 2008 can check from the bottom-most row of matrix 120 to the top-most row of matrix 120 to identify neighbor points for data points in the j-th column. If LiDAR device 102 is mounted in an upside-down position, then for a j-th column in matrix 120, processor 2008 can check from the top-most row of matrix 120 to the bottom-most row of matrix 120 to identify neighbors for data points in the j-th column. In response to identifying neighbor points in the j-th column, processor 2008 can proceed to check data points mapped to a next column of matrix 120, such as the (j+1)-th column.

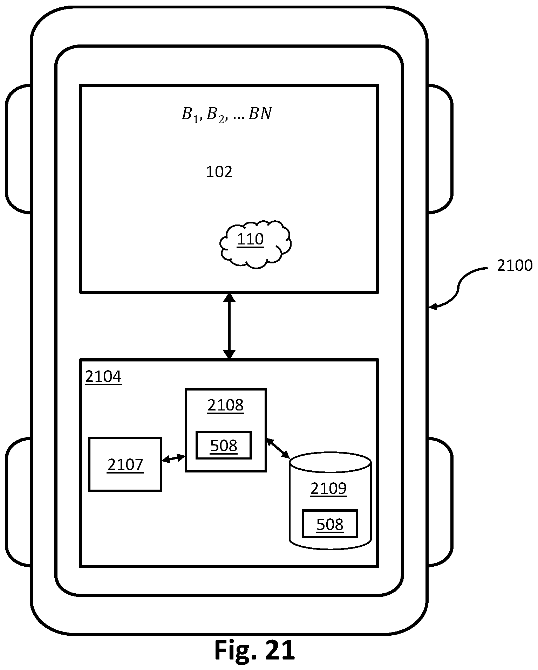

Fig. 21 is a diagram showing an example system that can implement ground filtering and clustering of LiDAR point data in one embodiment. Descriptions of Fig. 21 may reference components shown in Fig. 1 to Fig. 20. System 2100 can be a computing system implemented in vehicles, including autonomous vehicles and non-autonomous vehicles. System 2100 can include LiDAR device 102 and one or more controller 2104. In one embodiment, controller 2104 can include one or more processors, such as a processor 2107 and a processor 2108. In one embodiment, controller 2104 can be a microcontroller built into a single integrated circuit (IC) including one or more processors (or a multicore processor with multiple cores), memory devices (e.g., volatile and/or non-volatile memory), such as a memory device 2109, input/output (I/O) controls and interfaces, network components and interfaces, or other electronic components. In one embodiment, processors 2107, 2108 can be processors configured or programmed to perform a respective tasks. In one embodiment, processors 2107, 2108 can be processor cores in a multicore processor. In one embodiment, controller 2104 can be a SoC IC and processors 2107, 2108 can communicate with one another in the SoC IC via digital interfaces and various types of communication bus, such as RS-485, I2C, CAN bus, or other types of communication bus.

Similar to processor 107 described herein, processor 2107 can be a ground filtering processor configured to determine whether data points in LiDAR dataset 110 are ground points or non-ground points. In one embodiment, LiDAR device 102 can send LiDAR dataset 110 to processor 2107 and processor 2107 can determine whether data points in the received LiDAR dataset 110 are ground points or non-ground points. To determine whether data points in the received LiDAR dataset 110 are ground points or non-ground points, processor 2107 can be configured to perform the various tasks in Fig. 4, Fig. 5 and Fig. 6.

Similar to processor 108 described herein, processor 2108 can be a clustering processor configured to cluster data points in LiDAR dataset 110. In one embodiment, processor 2107 can send matrix 120 and associated ground data (e.g., ground data 508) to processor 2108. Based on the matrix 120 and ground data provided by processor 2107, processor 2108 can perform clustering on non-ground points and ignore the ground points. To cluster data points that are non-ground points, processor 2108 can be configured to perform the various tasks in Fig. 9 to Fig. 18.

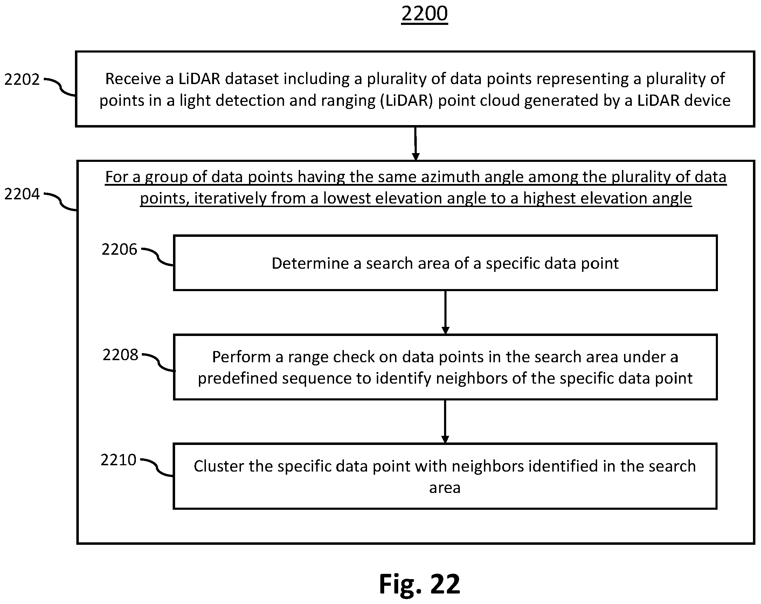

Fig. 22 is a diagram showing a process of clustering of LiDAR point data in one embodiment. A process 2200 can include one or more operations, actions, or functions as illustrated by one or more of blocks 2202, 2204, 2206, 2208 and/or 2210. Although illustrated as discrete blocks, various blocks can be divided into additional blocks, combined into fewer blocks, eliminated, performed in different order, or performed in parallel, depending on the desired implementation. Clustering can be done for a single column. Clustering can also be done as described herein relating to ground filtering. Clustering can be for the whole point cloud.

Process 2200 can be performed by one or more controllers, such as controllers described with respect to Fig. 1 to Fig. 21, that include a processor in connection with a light detection and ranging (LiDAR) sensor. Processor 2200 can allow the processor to cluster data points in a LiDAR data set using reduced processing power. Process 2200 can begin at block 2202. At block 2202, the processor can receive a LiDAR dataset including a plurality of data points representing a plurality of points in a light detection and ranging (LiDAR) point cloud generated by a LiDAR device.

Process 2200 can proceed from block 2202 to block 2204. At block 2204, the processor can perform blocks 2206, 2208, 2210 for a group of data points having the same azimuth angle among the plurality of data points, and iteratively from a lowest elevation angle to a highest elevation angle. In one embodiment, the processor can receiving a matrix that represents the LiDAR dataset, where each column of the matrix represents azimuth angles of the plurality of data points and each row of the matrix represents elevation angles of the plurality of data points. The group of data points having the same azimuth angle can be a column of the matrix. In one embodiment, the processor can map the plurality of data points to a matrix. In one embodiment, the group of data points can be non-ground points.

At block 2206, the processor can determine a search area of a specific data point. In one embodiment, the processor can determine the search area of the specific data point by determining a size of an initial search area and filtering the initial search area to keep data points that underwent the range check at least once.

At block 2208, the processor can perform a range check on data points in the search area under a predefined sequence to identify neighbors of the specific data point. In one embodiment, the processor can perform the range check by determining a range difference between the specific data point and a data point undergoing the range check. The processor can further compare the range difference with a predefined threshold. The processor can further determine the data point undergoing the range check is a neighbor of the specific data point when the range difference is less than or equal to the predefined threshold. The processor can further determine the data point undergoing the range check is a non-neighbor of the specific data point when the range difference is greater than the predefined threshold.

In one embodiment, the processor the search area can include a first zone including data points having the same azimuth angle as the specific data point, a second zone including data points having the same elevation angle as the specific data point, a third zone including data points bounded by the first zone and the second zone and a fourth zone four bounded by the second zone and data points that have the same azimuth angle as the specific data point and that are excluded from the first zone, where the predefined sequence is the first zone, the second zone, the third zone and the fourth zone. In one embodiment, the processor can identify a neighbor in the first zone, and in response to identifying the neighbor in the first zone, stop the range check in the first zone, the second zone and the third zone and perform the range check on data points in the fourth zone.

In one embodiment, The processor can identify a neighbor in the second zone and in response to identifying the neighbor in the second zone, stop the range check in the second zone, the third zone and the fourth zone. In one embodiment, the processor can identify no neighbors for the specific data point in the search area, create a cluster and add the specific data point without neighbors to the cluster.

At block 2210, the processor can cluster the specific data point with neighbors identified in the search area. In one embodiment, the processor can identify at least one neighbor of the specific data point and link the specific data point to the at least one neighbor to create a cluster.

In one embodiment, the processor can determine a size of a cluster formed by the specific data point and at least one neighbor of the specific data point, compare the size of the cluster to a predefined size threshold, keep the cluster when the size of the cluster is greater than the predefined size threshold and discard the cluster when the size of the cluster is less than or equal to the predefined size threshold.

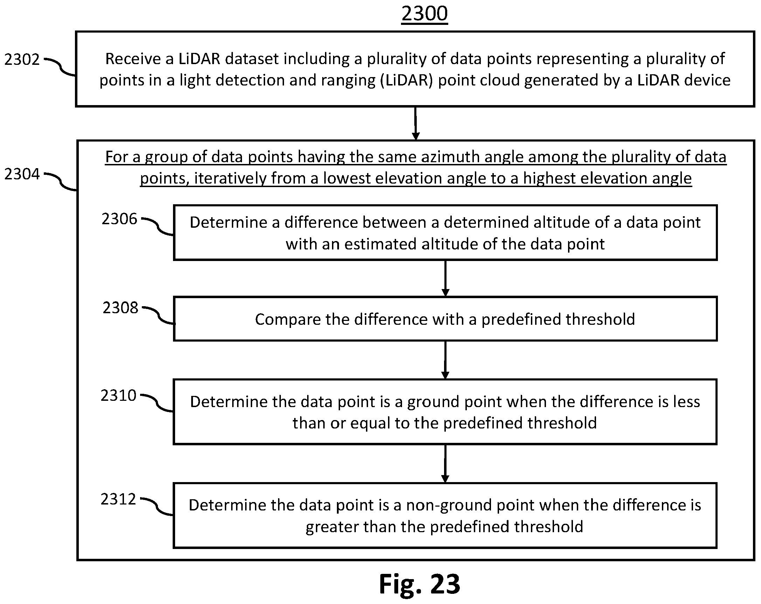

Fig. 23 is a diagram showing a process of filtering ground points in a LiDAR dataset in one embodiment. A process 2300 can include one or more operations, actions, or functions as illustrated by one or more of blocks 2302, 2304, 2306, 2308, 2310 and/or 2312. Although illustrated as discrete blocks, various blocks can be divided into additional blocks, combined into fewer blocks, eliminated, performed in different order, or performed in parallel, depending on the desired implementation.

Process 2300 can be performed by one or more controllers, such as controllers described with respect to Fig. 1 to Fig. 21, that include a processor in connection with a light detection and ranging (LiDAR) sensor. Processor 2300 can allow the processor to filter ground points in a LiDAR data set using reduced processing power. Process 2300 can begin at block 2302. At block 2302, the processor can receive a LiDAR dataset including a plurality of data points representing a plurality of points in a light detection and ranging (LiDAR) point cloud generated by a LiDAR device. In one embodiment, the processor can receive a matrix that represents the LiDAR dataset, where each column of the matrix represents azimuth angles of the plurality of data points and each row of the matrix represents elevation angles of the plurality of data points. The group of data points having the same azimuth angle can be a column of the matrix. In one embodiment, the processor can map the plurality of data points to the matrix.

Process 2300 can proceed from block 2302 to block 2304. At block 2304, the processor can perform blocks 2306, 2308, 2310, 2312 for a group of data points having the same azimuth angle among the plurality of data points, and iteratively from a lowest elevation angle to a highest elevation angle. At block 2306, the processor can determine a difference between a determined altitude of a data point with an estimated altitude of the data point.

At block 2308, the processor can compare the difference with a predefined threshold. At block 2310, the processor can determine the data point is a ground point when the difference is less than or equal to the predefined threshold. At block 2312, the processor can determine the data point is a non-ground point when the difference is greater than the predefined threshold.

In one embodiment, the processor can identify, in the group of data points, a data point that is closest to the LiDAR device. Based on the data point that is closest to the LiDAR device, the processor can determine a plurality of estimated ground points that correspond to the plurality of data points. In one embodiment, the processor can use the data point that is closest to the LiDAR device to initialize a plurality of states of a Kalman filter that corresponds to the plurality of data points and use the Kalman filter to determine the plurality of estimated ground points that correspond to the plurality of data points.

In one embodiment, the processor can, in response to the data point being a ground point, update a state of the Kalman filter that corresponds to the data point. An update to the state updates the plurality of estimated ground points. The processor can further, in response to the data point being a non-ground point, discard the state of the Kalman filter that corresponds to the data point.

In one embodiment, the processor can identify, in the group of data points, a data point that is closest to the LiDAR device by, iteratively from a lowest elevation angle to a highest elevation angle, determine a difference between the determined altitude of the data point and an estimated flat ground altitude. The processor can further compare the difference between the determined altitude of the data point and the estimated flat ground altitude with another predefined threshold. The processor can further determine the determined altitude of the data point is less than the estimated flat ground altitude. The processor can further, in response to determining the determined altitude of the data point is less than the estimated flat ground altitude, set he data point as the data point that is closest to the LiDAR device.

In one embodiment, the processor can determine a first data point in the group of data points is a ground point. The processor can further determine a second data point in the group of data points is a non-ground point, wherein the second data point follows the first data point in an iteration from the lowest elevation to the highest elevation angle. The processor can further, in response to determining the second data point is non-ground point following determining the first data point is ground point, apply a backwards check by verifying, iteratively from the second data point to a data point having the lowest elevation angle, whether the ground points in the group of data points are ground points or the non-ground points.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Examples

The following examples are embodiments.

A method of receiving a LiDAR dataset including a plurality of data points representing a plurality of points in a light detection and ranging (LiDAR) point cloud generated by a LiDAR device, for a group of data points having the same azimuth angle among the plurality of data points, and iteratively from a lowest elevation angle to a highest elevation angle: determining a search area of a specific data point, perform a range check on data points in the search area under a predefined sequence to identify neighbors of the specific data point, and cluster the specific data point with neighbors identified in the search area.

A method wherein receiving the LiDAR dataset comprises receiving a matrix that represents the LiDAR dataset, and wherein: each column of the matrix represents azimuth angles of the plurality of data points, each row of the matrix represents elevation angles of the plurality of data points, and the group of data points having the same azimuth angle is a column of the matrix.

A method wherein including mapping the plurality of data points to a matrix, wherein: each column of the matrix represents azimuth angles of the plurality of data points, each row of the matrix represents elevation angles of the plurality of data points, and the group of data points having the same azimuth angle is a column of the matrix.

A method wherein performing the range check comprises: determining a range difference between the specific data point and a data point undergoing the range check, comparing the range difference with a predefined threshold, determining the data point undergoing the range check is a neighbor of the specific data point when the range difference is less than or equal to the predefined threshold, and determining the data point undergoing the range check is a non-neighbor of the specific data point when the range difference is greater than the predefined threshold.

A method wherein the search area comprises: a first zone including data points having the same azimuth angle as the specific data point, a second zone including data points having the same elevation angle as the specific data point, a third zone including data points bounded by the first zone and the second zone, and a fourth zone four bounded by the second zone and data points that have the same azimuth angle as the specific data point and that are excluded from the first zone, and wherein the predefined sequence is the first zone, the second zone, the third zone and the fourth zone.

A method including identifying a neighbor in the first zone, in response to identifying the neighbor in the first zone, stopping the range check in the first zone, the second zone and the third zone, and performing the range check on data points in the fourth zone.

A method including identifying a neighbor in the second zone and in response to identifying the neighbor in the second zone, stopping the range check in the second zone, the third zone and the fourth zone.

A method wherein determining the search area of the specific data point comprises: determining a size of an initial search area, and filtering the initial search area to keep data points that underwent the range check at least once.

A method including identifying no neighbors for the specific data point in the search area, creating a cluster, and adding the specific data point without neighbors to the cluster.

A method including identifying at least one neighbor of the specific data point and linking the specific data point to the at least one neighbor to create a cluster.

A method including determining a size of a cluster formed by the specific data point and at least one neighbor of the specific data point, comparing the size of the cluster to a predefined size threshold, keeping the cluster when the size of the cluster is greater than the predefined size threshold, and discarding the cluster when the size of the cluster is less than or equal to the predefined size threshold.

A method wherein the group of data points are non-ground points.

A system including a light detection and ranging (LiDAR) device and a processor in connection with the LiDAR device, wherein the processor can be configured to carry out any one of examples herein.

A vehicle that comprises a system according any of the systems herein.

A machine-readable medium carrying machine readable instructions, which when executed by a processor of a machine, causes the machine to carry out the method of any one of examples herein.

A method of receiving a LiDAR dataset including a plurality of data points representing a plurality of points in a light detection and ranging (LiDAR) point cloud generated by a LiDAR device, for a group of data points having the same azimuth angle among the plurality of data points, and iteratively from a lowest elevation angle to a highest elevation angle: determining a difference between a determined altitude of a data point with an estimated altitude of the data point, comparing the difference with a predefined threshold, determining the data point is a ground point when the difference is less than or equal to the predefined threshold, and determining the data point is a non-ground point when the difference is greater than the predefined threshold.

A method wherein receiving the LiDAR dataset comprises receiving a matrix that represents the LiDAR dataset, and wherein: each column of the matrix represents azimuth angles of the plurality of data points, each row of the matrix represents elevation angles of the plurality of data points, and the group of data points having the same azimuth angle is a column of the matrix.

A method including mapping the plurality of data points to a matrix, wherein: each column of the matrix represents azimuth angles of the plurality of data points, each row of the matrix represents elevation angles of the plurality of data points, and the group of data points having the same azimuth angle is a column of the matrix.

A method including identifying, in the group of data points, a data point that is closest to the LiDAR device, and based on the data point that is closest to the LiDAR device, determining a plurality of estimated ground points that correspond to the plurality of data points.

A method including using the data point that is closest to the LiDAR device to initialize a plurality of states of a Kalman filter that corresponds to the plurality of data points and using the Kalman filter to determine the plurality of estimated ground points that correspond to the plurality of data points.

A method including in response to the data point being a ground point, updating a state of the Kalman filter that corresponds to the data point to update the plurality of estimated ground points, and in response to the data point being a non-ground point, discarding the state of the Kalman filter that corresponds to the data point.

A method including identifying, in the group of data points, a data point that is closest to the LiDAR device by, iteratively from a lowest elevation angle to a highest elevation angle, determining a difference between the determined altitude of the data point and an estimated flat ground altitude, comparing the difference between the determined altitude of the data point and the estimated flat ground altitude with another predefined threshold, determining the determined altitude of the data point is less than the estimated flat ground altitude, and in response to determining the determined altitude of the data point is less than the estimated flat ground altitude, setting he data point as the data point that is closest to the LiDAR device.

A method including determining a first data point in the group of data points is a ground point, determining a second data point in the group of data points is a non-ground point, wherein the second data point follows the first data point in an iteration from the lowest elevation to the highest elevation angle, in response to determining the second data point is non-ground point following determining the first data point is ground point, applying a backwards check by verifying, iteratively from the second data point to a data point having the lowest elevation angle, whether the ground points in the group of data points are ground points or the non-ground points.

A system including a light detection and ranging (LiDAR) device and a processor in connection with the LiDAR device, wherein the processor can be configured to carry out any one of Examples herein.

A method of receiving a LiDAR dataset including a plurality of data points representing a plurality of points in a light detection and ranging (LiDAR) point cloud generated by a LiDAR device, mapping the plurality of data points to a matrix, wherein: each column of the matrix represents azimuth angles of the plurality of data points, each row of the matrix represents elevation angles of the plurality of data points, for a column of data points in the matrix, and iteratively from a lowest elevation angle to a highest elevation angle: determining a search area of a specific data point, perform a range check on data points in the search area under a predefined sequence to identify neighbors of the specific data point, and cluster the specific data point with neighbors identified in the search area.

A method wherein performing the range check comprises: determining a range difference between the specific data point and a data point undergoing the range check, comparing the range difference with a predefined threshold, determining the data point undergoing the range check is a neighbor of the specific data point when the range difference is less than or equal to the predefined threshold, and determining the data point undergoing the range check is a non-neighbor of the specific data point when the range difference is greater than the predefined threshold.

A method wherein the search area comprises: a first zone including data points having the same azimuth angle as the specific data point, a second zone including data points having the same elevation angle as the specific data point, a third zone including data points bounded by the first zone and the second zone, and a fourth zone four bounded by the second zone and data points that have the same azimuth angle as the specific data point and that are excluded from the first zone, and wherein the predefined sequence is the first zone, the second zone, the third zone and the fourth zone.

A method including identifying a neighbor in the first zone, in response to identifying the neighbor in the first zone, stopping the range check in the first zone, the second zone and the third zone, and performing the range check on data points in the fourth zone.

A method including identifying a neighbor in the second zone and in response to identifying the neighbor in the second zone, stopping the range check in the second zone, the third zone and the fourth zone.

A method wherein determining the search area of the specific data point comprises: determining a size of an initial search area, and filtering the initial search area to keep data points that underwent the range check at least once.

A method including identifying no neighbors for the specific data point in the search area, creating a cluster, and adding the specific data point without neighbors to the cluster.

A method including identifying at least one neighbor of the specific data point and linking the specific data point to the at least one neighbor to create a cluster.

A method including determining a size of a cluster formed by the specific data point and at least one neighbor of the specific data point, comparing the size of the cluster to a predefined size threshold, keeping the cluster when the size of the cluster is greater than the predefined size threshold, and discarding the cluster when the size of the cluster is less than or equal to the predefined size threshold.

A method wherein the group of data points are non-ground points.

A system including a light detection and ranging (LiDAR) device and a processor in connection with the LiDAR device, wherein the processor can be configured to carry out any one of Examples herein.

A method of receiving a LiDAR dataset including a plurality of data points representing a plurality of points in a light detection and ranging (LiDAR) point cloud generated by a LiDAR device, mapping the plurality of data points to a matrix, wherein: each column of the matrix represents azimuth angles of the plurality of data points, each row of the matrix represents elevation angles of the plurality of data points, for a column of data points in the matrix, and iteratively from a lowest elevation angle to a highest elevation angle: determining a difference between a determined altitude of a data point with an estimated altitude of the data point, comparing the difference with a predefined threshold, determining the data point is a ground point when the difference is less than or equal to the predefined threshold, and determining the data point is a non-ground point when the difference is greater than the predefined threshold.

A method including identifying, in the group of data points, a data point that is closest to the LiDAR device, and based on the data point that is closest to the LiDAR device, determining a plurality of estimated ground points that correspond to the plurality of data points.

A method including using the data point that is closest to the LiDAR device to initialize a plurality of states of a Kalman filter that corresponds to the plurality of data points and using the Kalman filter to determine the plurality of estimated ground points that correspond to the plurality of data points.

A method including in response to the data point being a ground point, updating a state of the Kalman filter that corresponds to the data point to update the plurality of estimated ground points, and in response to the data point being a non-ground point, discarding the state of the Kalman filter that corresponds to the data point.

A method including identifying, in the group of data points, a data point that is closest to the LiDAR device by, iteratively from a lowest elevation angle to a highest elevation angle, determining a difference between the determined altitude of the data point and an estimated flat ground altitude, comparing the difference between the determined altitude of the data point and the estimated flat ground altitude with another predefined threshold, determining the determined altitude of the data point is less than the estimated flat ground altitude, and in response to determining the determined altitude of the data point is less than the estimated flat ground altitude, setting he data point as the data point that is closest to the LiDAR device.

A method including determining a first data point in the group of data points is a ground point, determining a second data point in the group of data points is a non-ground point, wherein the second data point follows the first data point in an iteration from the lowest elevation to the highest elevation angle, in response to determining the second data point is non-ground point following determining the first data point is ground point, applying a backwards check by verifying, iteratively from the second data point to a data point having the lowest elevation angle, whether the ground points in the group of data points are ground points or the non-ground points.

A system including a light detection and ranging (LiDAR) device and a processor in connection with the LiDAR device, wherein the processor can be configured to carry out any one of Examples herein.

A method of receiving a LiDAR dataset including a plurality of data points representing a plurality of points in a light detection and ranging (LiDAR) point cloud generated by a LiDAR device, for a group of data points having the same azimuth angle among the plurality of data points, and iteratively from a lowest elevation angle to a highest elevation angle: determining a difference between a determined altitude of a data point with an estimated altitude of the data point, comparing the difference with a predefined threshold, determining the data point is a ground point when the difference is less than or equal to the predefined threshold, determining the data point is a non-ground point when the difference is greater than the predefined threshold, and for each non-ground point: determining a search area of the non-ground point, perform a range check on data points in the search area under a predefined sequence to identify neighbors of the non-ground point, and cluster the specific data point with neighbors identified in the search area.

A method wherein receiving the LiDAR dataset comprises receiving a matrix that represents the LiDAR dataset, and wherein: each column of the matrix represents azimuth angles of the plurality of data points, each row of the matrix represents elevation angles of the plurality of data points, and the group of data points having the same azimuth angle is a column of the matrix.

A method including mapping the plurality of data points to a matrix, wherein: each column of the matrix represents azimuth angles of the plurality of data points, each row of the matrix represents elevation angles of the plurality of data points, and the group of data points having the same azimuth angle is a column of the matrix.

A method including identifying, in the group of data points, a data point that is closest to the LiDAR device, and based on the data point that is closest to the LiDAR device, determining a plurality of estimated ground points that correspond to the plurality of data points.

A method including using the data point that is closest to the LiDAR device to initialize a plurality of states of a Kalman filter that corresponds to the plurality of data points and using the Kalman filter to determine the plurality of estimated ground points that correspond to the plurality of data points.

A method including in response to the data point being a ground point, updating a state of the Kalman filter that corresponds to the data point to update the plurality of estimated ground points, and in response to the data point being a non-ground point, discarding the state of the Kalman filter that corresponds to the data point.

A method including identifying, in the group of data points, a data point that is closest to the LiDAR device by, iteratively from a lowest elevation angle to a highest elevation angle, determining a difference between the determined altitude of the data point and an estimated flat ground altitude, comparing the difference between the determined altitude of the data point and the estimated flat ground altitude with another predefined threshold, determining the determined altitude of the data point is less than the estimated flat ground altitude, and in response to determining the determined altitude of the data point is less than the estimated flat ground altitude, setting he data point as the data point that is closest to the LiDAR device.

A method including determining a first data point in the group of data points is a ground point, determining a second data point in the group of data points is a non-ground point, wherein the second data point follows the first data point in an iteration from the lowest elevation to the highest elevation angle, in response to determining the second data point is non-ground point following determining the first data point is ground point, applying a backwards check by verifying, iteratively from the second data point to a data point having the lowest elevation angle, whether the ground points in the group of data points are ground points or the non-ground points.

A method wherein performing the range check comprises: determining a range difference between the non-ground point and a data point undergoing the range check, comparing the range difference with a predefined threshold, determining the data point undergoing the range check is a neighbor of the non-ground point when the range difference is less than or equal to the predefined threshold, and determining the data point undergoing the range check is a non-neighbor of the non-ground point when the range difference is greater than the predefined threshold.

A method wherein the search area comprises: a first zone including data points having the same azimuth angle as the non-ground point, a second zone including data points having the same elevation angle as the non-ground point, a third zone including data points bounded by the first zone and the second zone, and a fourth zone four bounded by the second zone and data points that have the same azimuth angle as the non-ground point and that are excluded from the first zone, and wherein the predefined sequence is the first zone, the second zone, the third zone and the fourth zone.

A method including identifying a neighbor in the first zone, in response to identifying the neighbor in the first zone, stopping the range check in the first zone, the second zone and the third zone, and performing the range check on data points in the fourth zone.

A method including identifying a neighbor in the second zone and in response to identifying the neighbor in the second zone, stopping the range check in the second zone, the third zone and the fourth zone.

A method wherein determining the search area of the specific data point comprises: determining a size of an initial search area, and filtering the initial search area to keep data points that underwent the range check at least once.

A method including identifying no neighbors for the non-ground point in the search area, creating a cluster, and adding the non-ground point without neighbors to the cluster.

A method including identifying at least one neighbor of the non-ground point and linking the non-ground point to the at least one neighbor to create a cluster.

A method including determining a size of a cluster formed by the non-ground point and at least one neighbor of the non-ground point, comparing the size of the cluster to a predefined size threshold, keeping the cluster when the size of the cluster is greater than the predefined size threshold, and discarding the cluster when the size of the cluster is less than or equal to the predefined size threshold.

A method of receiving a LiDAR dataset including a plurality of data points representing a plurality of points in a light detection and ranging (LiDAR) point cloud generated by a LiDAR device, mapping the plurality of data points to a matrix, wherein: each column of the matrix represents azimuth angles of the plurality of data points, each row of the matrix represents elevation angles of the plurality of data points, for a column of data points in the matrix, and iteratively from a lowest elevation angle to a highest elevation angle: determining a difference between a determined altitude of a data point with an estimated altitude of the data point, comparing the difference with a predefined threshold, determining the data point is a ground point when the difference is less than or equal to the predefined threshold, determining the data point is a non-ground point when the difference is greater than the predefined threshold, and for each non-ground point: determining a search area of the non-ground point, perform a range check on data points in the search area under a predefined sequence to identify neighbors of the non-ground point, and cluster the specific data point with neighbors identified in the search area.

A method including identifying, in the group of data points, a data point that is closest to the LiDAR device, and based on the data point that is closest to the LiDAR device, determining a plurality of estimated ground points that correspond to the plurality of data points.

A method including using the data point that is closest to the LiDAR device to initialize a plurality of states of a Kalman filter that corresponds to the plurality of data points and using the Kalman filter to determine the plurality of estimated ground points that correspond to the plurality of data points.

A method including in response to the data point being a ground point, updating a state of the Kalman filter that corresponds to the data point to update the plurality of estimated ground points, and in response to the data point being a non-ground point, discarding the state of the Kalman filter that corresponds to the data point.

A method including identifying, in the group of data points, a data point that is closest to the LiDAR device by, iteratively from a lowest elevation angle to a highest elevation angle, determining a difference between the determined altitude of the data point and an estimated flat ground altitude, comparing the difference between the determined altitude of the data point and the estimated flat ground altitude with another predefined threshold, determining the determined altitude of the data point is less than the estimated flat ground altitude, and in response to determining the determined altitude of the data point is less than the estimated flat ground altitude, setting he data point as the data point that is closest to the LiDAR device.

A method including determining a first data point in the group of data points is a ground point, determining a second data point in the group of data points is a non-ground point, wherein the second data point follows the first data point in an iteration from the lowest elevation to the highest elevation angle, in response to determining the second data point is non-ground point following determining the first data point is ground point, applying a backwards check by verifying, iteratively from the second data point to a data point having the lowest elevation angle, whether the ground points in the group of data points are ground points or the non-ground points.

A method wherein performing the range check comprises: determining a range difference between the non-ground point and a data point undergoing the range check, comparing the range difference with a predefined threshold, determining the data point undergoing the range check is a neighbor of the non-ground point when the range difference is less than or equal to the predefined threshold, and determining the data point undergoing the range check is a non-neighbor of the non-ground point when the range difference is greater than the predefined threshold.

A method wherein the search area comprises: a first zone including data points having the same azimuth angle as the non-ground point, a second zone including data points having the same elevation angle as the non-ground point, a third zone including data points bounded by the first zone and the second zone, and a fourth zone four bounded by the second zone and data points that have the same azimuth angle as the non-ground point and that are excluded from the first zone, and wherein the predefined sequence is the first zone, the second zone, the third zone and the fourth zone.

A method including identifying a neighbor in the first zone, in response to identifying the neighbor in the first zone, stopping the range check in the first zone, the second zone and the third zone, and performing the range check on data points in the fourth zone.

A method including identifying a neighbor in the second zone and in response to identifying the neighbor in the second zone, stopping the range check in the second zone, the third zone and the fourth zone.

A method wherein determining the search area of the specific data point comprises: determining a size of an initial search area, and filtering the initial search area to keep data points that underwent the range check at least once.

A method including identifying no neighbors for the non-ground point in the search area, creating a cluster, and adding the non-ground point without neighbors to the cluster.

A method including identifying at least one neighbor of the non-ground point and linking the non-ground point to the at least one neighbor to create a cluster.

A method including determining a size of a cluster formed by the non-ground point and at least one neighbor of the non-ground point, comparing the size of the cluster to a predefined size threshold, keeping the cluster when the size of the cluster is greater than the predefined size threshold, and discarding the cluster when the size of the cluster is less than or equal to the predefined size threshold.

A method of receiving a LiDAR dataset including a plurality of data points representing a plurality of points in a light detection and ranging (LiDAR) point cloud generated by a LiDAR device, wherein the plurality of data points comprises ground points and non-ground points, for a group of non-ground points having the same azimuth angle among the plurality of data points, and iteratively from a lowest elevation angle to a highest elevation angle: determining a search area of a non-ground point, perform a range check on data points in the search area under a predefined sequence to identify neighbors of the non-ground point, and cluster the non-ground point with neighbors identified in the search area.

A method wherein receiving the LiDAR dataset comprises receiving a matrix that represents the LiDAR dataset, and wherein: each column of the matrix represents azimuth angles of the plurality of data points, each row of the matrix represents elevation angles of the plurality of data points, and the group of data points having the same azimuth angle is a column of the matrix.

A method including mapping the plurality of data points to a matrix, wherein: each column of the matrix represents azimuth angles of the plurality of data points, each row of the matrix represents elevation angles of the plurality of data points, and the group of data points having the same azimuth angle is a column of the matrix.

A method wherein performing the range check comprises: determining a range difference between the non-ground point and a data point undergoing the range check, comparing the range difference with a predefined threshold, determining the data point undergoing the range check is a neighbor of the non-ground point when the range difference is less than or equal to the predefined threshold, and determining the data point undergoing the range check is a non-neighbor of the non-ground point when the range difference is greater than the predefined threshold.

A method wherein the search area comprises: a first zone including data points having the same azimuth angle as the non-ground point, a second zone including data points having the same elevation angle as the non-ground point, a third zone including data points bounded by the first zone and the second zone, and a fourth zone four bounded by the second zone and data points that have the same azimuth angle as the non-ground point and that are excluded from the first zone, and wherein the predefined sequence is the first zone, the second zone, the third zone and the fourth zone.

A method including identifying a neighbor in the first zone, in response to identifying the neighbor in the first zone, stopping the range check in the first zone, the second zone and the third zone, and performing the range check on data points in the fourth zone.

A method including identifying a neighbor in the second zone and in response to identifying the neighbor in the second zone, stopping the range check in the second zone, the third zone and the fourth zone.

A method wherein determining the search area of the non-ground point comprises: determining a size of an initial search area, and filtering the initial search area to keep data points that underwent the range check at least once.

A method including identifying no neighbors for the non-ground point in the search area, creating a cluster, and adding the non-ground point without neighbors to the cluster.

A method including identifying at least one neighbor of the non-ground point and linking the non-ground point to the at least one neighbor to create a cluster.

A method including determining a size of a cluster formed by the non-ground point and at least one neighbor of the non-ground point, comparing the size of the cluster to a predefined size threshold, keeping the cluster when the size of the cluster is greater than the predefined size threshold, and discarding the cluster when the size of the cluster is less than or equal to the predefined size threshold.

A method including, for data points having the same azimuth angle, and iteratively from the lowest elevation angle to the highest elevation angle: determining a difference between a determined altitude of a data point with an estimated altitude of the data point, comparing the difference with a predefined threshold, determining the data point is a ground point when the difference is less than or equal to the predefined threshold, and determining the data point is a non-ground point when the difference is greater than the predefined threshold, wherein the group of data points are non-ground points.

A method including identifying, in the group of data points, a data point that is closest to the LiDAR device, and based on the data point that is closest to the LiDAR device, determining a plurality of estimated ground points that correspond to the plurality of data points.

A method including using the data point that is closest to the LiDAR device to initialize a plurality of states of a Kalman filter that corresponds to the plurality of data points and using the Kalman filter to determine the plurality of estimated ground points that correspond to the plurality of data points.

A method including in response to the data point being a ground point, updating a state of the Kalman filter that corresponds to the data point to update the plurality of estimated ground points, and in response to the data point being a non-ground point, discarding the state of the Kalman filter that corresponds to the data point.

A method including identifying, in the group of data points, a data point that is closest to the LiDAR device by, iteratively from a lowest elevation angle to a highest elevation angle, determining a difference between the determined altitude of the data point and an estimated flat ground altitude, comparing the difference between the determined altitude of the data point and the estimated flat ground altitude with another predefined threshold, determining the determined altitude of the data point is less than the estimated flat ground altitude, and in response to determining the determined altitude of the data point is less than the estimated flat ground altitude, setting he data point as the data point that is closest to the LiDAR device.

A method including determining a first data point in the group of data points is a ground point, determining a second data point in the group of data points is a non-ground point, wherein the second data point follows the first data point in an iteration from the lowest elevation to the highest elevation angle, in response to determining the second data point is non-ground point following determining the first data point is ground point, applying a backwards check by verifying, iteratively from the second data point to a data point having the lowest elevation angle, whether the ground points in the group of data points are ground points or the non-ground points.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements, if any, in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

**Claims**

1. A computer-implemented method for a processor in connection with a light detection and ranging (Li-DAR) sensor to cluster data points in a LiDAR data set using reduced processing power, the computer-implemented method comprising:

   receiving a LiDAR dataset including a plurality of data points representing a plurality of points in a light detection and ranging (LiDAR) point cloud generated by a LiDAR device; and
   for a group of data points having the same azimuth angle among the plurality of data points, iteratively from a lowest elevation angle to a highest elevation angle:

      determining a search area of a specific data point;
      performing a range check on data points in the search area under a predefined sequence to identify neighbors of the specific data point; and
      clustering the specific data point with neighbors identified in the search area.

2. The computer-implemented method according to claim 1,

   wherein receiving the LiDAR dataset comprises receiving a matrix that represents the LiDAR dataset, and
   wherein:

      each column of the matrix represents azimuth angles of the plurality of data points;
      each row of the matrix represents elevation angles of the plurality of data points; and
      the group of data points having the same azimuth angle is a column of the matrix.

3. The computer-implemented method according to claim 1, further comprising mapping the plurality of data points to a matrix,
   wherein:

      each column of the matrix represents azimuth angles of the plurality of data points;
      each row of the matrix represents elevation angles of the plurality of data points; and
      the group of data points having the same azimuth angle is a column of the matrix.

4. The computer-implemented method according to any one of claims 1-3,
   wherein performing the range check comprises:

      determining a range difference between the specific data point and a data point undergoing the range check;
      comparing the range difference with a predefined threshold;
      determining the data point undergoing the range check is a neighbor of the specific data point when the range difference is less than or equal to the predefined threshold; and
      determining the data point undergoing the range check is a non-neighbor of the specific data point when the range difference is greater than the predefined threshold.

5. The computer-implemented method according to any one of claims 1-4,

   wherein the search area comprises:

a first zone including data points having the same azimuth angle as the specific data point;

a second zone including data points having the same elevation angle as the specific data point;

a third zone including data points bounded by the first zone and the second zone; and

a fourth zone four bounded by the second zone and data points that have the same azimuth angle as the specific data point and that are excluded from the first zone, and

wherein the predefined sequence is the first zone, the second zone, the third zone and the fourth zone.

6. The computer-implemented method according to claim 5, further comprising:

identifying a neighbor in the first zone;

in response to identifying the neighbor in the first zone, stopping the range check in the first zone, the second zone and the third zone; and

performing the range check on data points in the fourth zone.

7. The computer-implemented method according to claim 5, further comprising:

identifying a neighbor in the second zone; and

in response to identifying the neighbor in the second zone, stopping the range check in the second zone, the third zone and the fourth zone.

8. The computer-implemented method according to any one of claims 1-7,
wherein determining the search area of the specific data point comprises:

determining a size of an initial search area; and
filtering the initial search area to keep data points that underwent the range check at least once.

9. The computer-implemented method according to any one of claims 1-8, further comprising:

identifying no neighbors for the specific data point in the search area;
creating a cluster; and
adding the specific data point without neighbors to the cluster.

10. The computer-implemented method according to any one of claims 1-8, further comprising:

identifying at least one neighbor of the specific data point; and
linking the specific data point to the at least one neighbor to create a cluster.

11. The computer-implemented method according to claim 1-8, further comprising:

determining a size of a cluster formed by the specific data point and at least one neighbor of the specific data point;
comparing the size of the cluster to a predefined size threshold;
keeping the cluster when the size of the cluster is greater than the predefined size threshold; and
discarding the cluster when the size of the cluster is less than or equal to the predefined size threshold.

12. The computer-implemented method according to any one of claims 1-11, wherein the group of data points are non-ground points.

13. A system comprising:

a light detection and ranging (LiDAR) device;
a processor in connection with the LiDAR device, the processor being configured to carry out the computer-implemented method of any one of claims 1-12.

14. A vehicle comprising the system according to claim 13.

15. A machine-readable medium carrying machine readable instructions, which when executed by a processor of a machine, causes the machine to carry out the method of any one of claims 1 to 12.

EP 4 600 691 A1

$B_1, B_2, \ldots BN$

102

110

100

104

107

108

106

109

110

120

**Fig. 1**

**Fig. 2**

**Fig. 3**

Fig. 4

**Fig. 5**

EP 4 600 691 A1

**Fig. 6**

EP 4 600 691 A1

EP 4 600 691 A1

$$B_1, B_2, \ldots BN$$

102

110

700

704

707

410

110

709

508

705

**Fig. 7**

Fig. 8

**Fig. 9**

**Fig. 10**

Fig. 11

**Fig. 12**

**Fig. 13**

**Fig. 14**

Fig. 15

Fig. 16

Fig. 17

**Fig. 18**

EP 4 600 691 A1

**Fig. 19**

EP 4 600 691 A1

Fig. 20

Fig. 21

## 2200

| 2202 | Receive a LiDAR dataset including a plurality of data points representing a plurality of points in a light detection and ranging (LiDAR) point cloud generated by a LiDAR device |

<u>For a group of data points having the same azimuth angle among the plurality of data points, iteratively from a lowest elevation angle to a highest elevation angle</u>

2204

2206 — Determine a search area of a specific data point

2208 — Perform a range check on data points in the search area under a predefined sequence to identify neighbors of the specific data point

2210 — Cluster the specific data point with neighbors identified in the search area

**Fig. 22**

EP 4 600 691 A1

## 2300

2302 — Receive a LiDAR dataset including a plurality of data points representing a plurality of points in a light detection and ranging (LiDAR) point cloud generated by a LiDAR device

2304 — For a group of data points having the same azimuth angle among the plurality of data points, iteratively from a lowest elevation angle to a highest elevation angle

2306 — Determine a difference between a determined altitude of a data point with an estimated altitude of the data point

2308 — Compare the difference with a predefined threshold

2310 — Determine the data point is a ground point when the difference is less than or equal to the predefined threshold

2312 — Determine the data point is a non-ground point when the difference is greater than the predefined threshold

## Fig. 23

Europäisches Patentamt
European Patent Office
Office européen des brevets

# EUROPEAN SEARCH REPORT

**Application Number**

EP 24 15 6585

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HANNANEH NAJDATAEI ET AL: "Lisco: A Continuous Approach in LiDAR Point-cloud Clustering", ARXIV.ORG, CORNELL UNIVERSITY LIBRARY, 201 OLIN LIBRARY CORNELL UNIVERSITY ITHACA, NY 14853, 6 November 2017 (2017-11-06), XP080834654, * abstract; figures 2,3 * * sections I., II., III. * | 1-15 | INV. G01S7/48 G01S17/89 G01S17/931 G06T7/11 G06T7/187 G06V10/762 G06V20/56 |
| A | Reich Andreas ET AL: "Low Latency Instance Segmentation by Continuous Clustering for Rotating LiDAR Sensors", arXiv.org, 23 November 2023 (2023-11-23), XP093182805, DOI: 10.48550/arxiv.2311.13976 Retrieved from the Internet: URL:https://arxiv.org/pdf/2311.13976 [retrieved on 2024-07-05] * abstract; figures 3,4 * * section III. * | 1-15 | |

**TECHNICAL FIELDS SEARCHED (IPC)**

G01S
G06T
G06V

The present search report has been drawn up for all claims

| Place of search | Date of completion of the search | Examiner |
|---|---|---|
| Munich | 5 July 2024 | Grübl, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)